(19) **Europäisches Patentamt / European Patent Office / Office européen des brevets**

(11) **EP 4 183 904 A1**

(12) # EUROPEAN PATENT APPLICATION
published in accordance with Art. 153(4) EPC

(43) Date of publication:
**24.05.2023 Bulletin 2023/21**

(21) Application number: **21842370.5**

(22) Date of filing: **15.07.2021**

(51) International Patent Classification (IPC):
**C25D 1/04** *(2006.01)*  **H01M 4/66** *(2006.01)*

(52) Cooperative Patent Classification (CPC):
**C25D 1/04; H01M 4/66;** Y02E 60/10

(86) International application number:
**PCT/JP2021/026580**

(87) International publication number:
**WO 2022/014669 (20.01.2022 Gazette 2022/03)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.07.2020 JP 2020121832**

(71) Applicant: **Toyo Kohan Co., Ltd.**
**Tokyo 141-8260 (JP)**

(72) Inventors:
• **KAWAMURA, Michio**
  **Kudamatsu-shi Yamaguchi 744-8611 (JP)**

• **HORIE, Shinichiro**
  **Kudamatsu-shi Yamaguchi 744-8611 (JP)**
• **TSUTSUMI, Etsuro**
  **Kudamatsu-shi Yamaguchi 744-8611 (JP)**
• **YOSHIZAKI, Yuma**
  **Kudamatsu-shi Yamaguchi 744-8611 (JP)**
• **YOSHIOKA, Koh**
  **Kudamatsu-shi Yamaguchi 744-8611 (JP)**

(74) Representative: **Hoffmann Eitle**
**Patent- und Rechtsanwälte PartmbB**
**Arabellastraße 30**
**81925 München (DE)**

(54) **ELECTROLYTIC IRON FOIL**

(57)  [Object]
It is an object of the present invention to provide an electrolytic iron foil and a battery current collector in which the risk of breakage or tearing during manufacture caused by reduction in film thickness can be suppressed and which have thinness as well as strength and elongation sufficient for withstanding repeated charging and discharging in a secondary battery.
[Solving Means]
An electrolytic iron foil in which, in at least either one surface, a crystallite diameter on (110) plane of iron is equal to or more than 45 nm and the electrolytic iron foil is less than 20 um in thickness.

[Fig.1]

EP 4 183 904 A1

## Description

[Technical Field]

The present invention relates to an electrolytic foil to be used particularly preferably for a current collector of a secondary battery or the like, and particularly relates to an electrolytic iron foil.

[Background Art]

For enhancing the capacity of a battery such as a lithium ion secondary battery and a nickel hydrogen battery that have conventionally been used, a reduction in the thickness of a current collector is effective. As electrolytic foils for secondary batteries, an electrolytic copper foil and the like are widely known.
For example, in PTL 1, in an electrolytic copper foil for a lithium ion secondary battery negative electrode, an electrolytic copper foil intended for restraining occurrence of foil breakage and wrinkling and the like is disclosed.

[Citation List]

[Patent Literature]

[PTL 1]
Japanese Patent Laid-open No. 2017-014608

[Summary]

[Technical Problems]

When a copper foil as the one described in PTL 1 is used for a battery current collector, the possibility of lowering in strength depending on the heating temperature during manufacturing has been regarded as a problem. In consideration of the above problem, the present inventors examined metallic materials capable of restraining a lowering in strength even under heating during manufacturing of an electrode, and focused on iron (Fe) which is lowered little in strength in the heating temperature region during manufacturing of a current collector and which is known as a material inherently excellent in strength and elongation. In addition, iron has advantages in terms of abundant resources and cost.
In the case where iron or a metallic material with high iron content is used as a current collector material, the material properties to be taken into consideration are as follows.
Specifically, in the case where metal with high iron content is used as a current collector material, use for aqueous batteries leads to the possibility of reaction with the electrolytic liquid. However, use for nonaqueous batteries permits application of a current collector material with high iron content.
In addition, in the case of manufacturing an iron foil having such a thickness as to be applicable to a current collector, there are considered a method of manufacturing the iron foil by rolling and a method of manufacturing the iron foil by electroplating.
In the case of manufacturing an iron foil having a thickness of less than 20 um by rolling, continuous production is difficult, and foreign matter or impurities are liable to be engulfed at the time of rolling, posing many problems on a quality basis. Moreover, due to work hardening, there is a possibility that elongation of the obtained iron foil cannot be secured. On the other hand, manufacturing the iron foil by electroplating is considered to enable manufacture of an iron foil which has elongation and strength and which has such a thickness as to be applicable to a current collector.
For example, Japanese Patent Laid-open No. Sho 58-73787 and Japanese Patent Laid-open No. Hei 8-60392 disclose electrolytic iron foils, though not for use as a battery current collector. However, these electrolytic iron foils do not have a thickness applicable to a current collector for a high-capacity battery, and no description can be found with regard to breakage, tearing, or the like of the foil during handling or the like. In addition, the electrolytic iron foils were not ones which have elongation and strength desired by the present inventors.
The present inventors made extensive and intensive examinations in consideration of the above-mentioned problems, to arrive at the present invention. In other words, it is an object of the present invention to provide an electrolytic iron foil that is thin, also has elongation and strength, and is capable of restraining breakage or tearing during handling or the like.

[Solution to Problems]

Specifically, an electrolytic iron foil according to the present invention is an electrolytic iron foil in which, in at least either one surface, a crystallite diameter on (110) plane of iron is equal to or more than 45 nm, and the electrolytic iron foil is less than 20 um in thickness.

Note that, preferably, in the electrolytic iron of (1), (2) in both surfaces, a crystalline orientation index of the (110) plane is equal to or more than 0.2.

In addition, preferably, in the electrolytic iron foil of (1) or (2), (3) in at least either one surface, an average crystal grain diameter of crystal grains on a surface is equal to or more than 0.66 um.

Further, preferably, in the electrolytic iron foil of any one of (1) to (3), (4) elongation is equal to or more than 1.6%.

Preferably, in the electrolytic iron foil of any one of (1) to (4), (5) tensile strength is equal to or more than 130 MPa.

Further, preferably, (6) an electrolytic iron foil for a battery current collector in the present invention includes the electrolytic iron foil according to any one of (1) to (5).

Furthermore, preferably, (7) an electrolytic iron foil for a nonaqueous battery current collector in the present invention includes the electrolytic iron foil according to any one of (1) to (6).

[Advantageous Effects of Invention]

According to the present invention, it is possible to provide an electrolytic iron foil that is thin and that is capable of restraining breakage or tearing during handling thereof. In addition, it is possible to provide an electrolytic iron foil having elongation and strength sufficient to endure repetitive charging and discharging even when used as a secondary battery current collector.

[Brief Description of Drawing]

[FIG. 1]

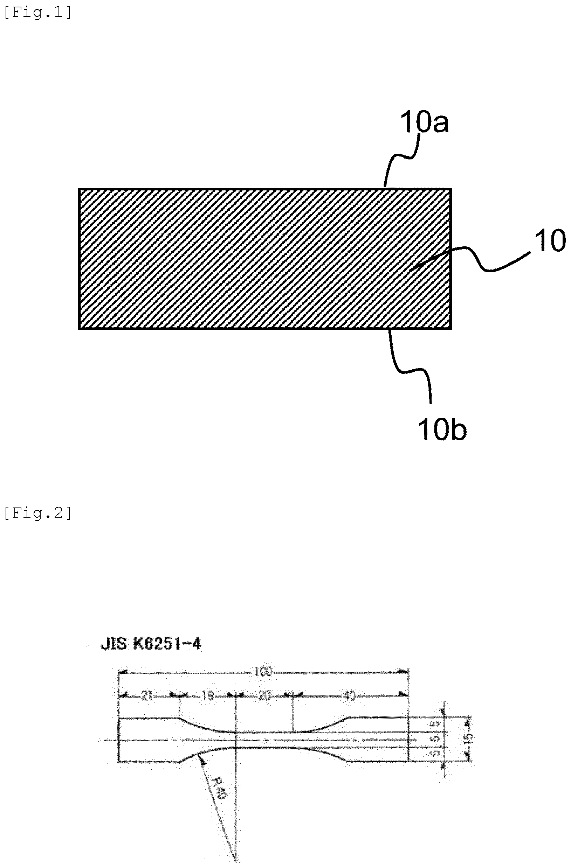

FIG. 1 is a schematic diagram depicting a sectional view of an electrolytic iron foil 10 in the present embodiment.
[FIG. 2]
FIG. 2 is a schematic diagram of a specimen used for measuring tensile strength, maximum load, and elongation of the electrolytic iron foil 10 in the present embodiment.
[FIG. 3]

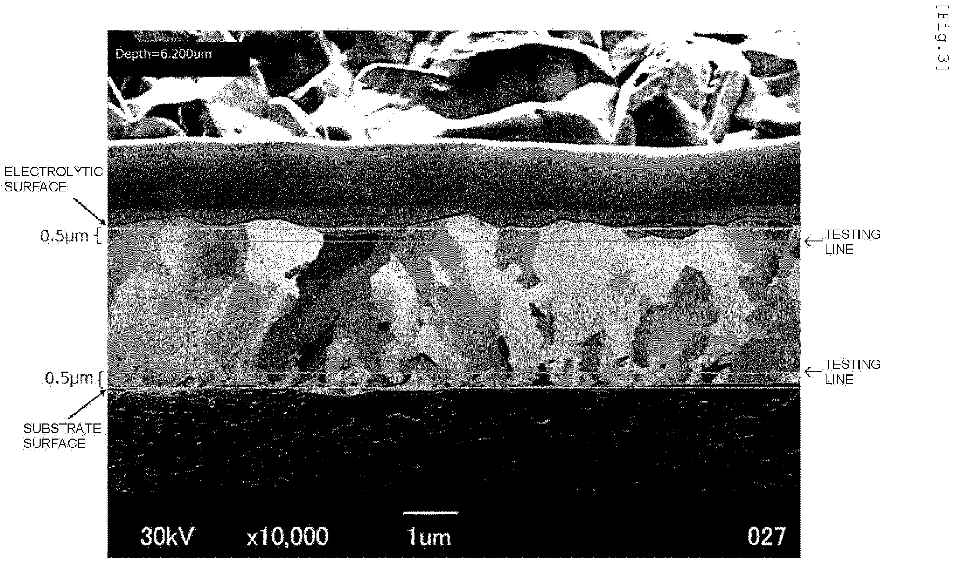

FIG. 3 is a diagram depicting a method of measuring a crystal grain diameter in a surface, by use of a focused ion beam processing observation device (FIB), in an example.

[Description of Embodiment]

«Electrolytic iron foil»

An embodiment for implementing an electrolytic iron foil of the present invention will be described below.

An electrolytic iron foil 10 of the present embodiment is applied to a battery negative electrode current collector, and can also be applied to a battery positive electrode current collector. The kind of the battery may be a secondary battery or may be a primary battery. As a nonaqueous secondary battery, there can be mentioned, for example, a lithium secondary battery, a sodium secondary battery, a magnesium secondary battery, a solid-state battery, and the like.

The electrolytic iron foil 10 of the present embodiment is an electrolytic iron foil in which, in at least either one surface, a crystallite diameter on (110) plane of iron measured by X-ray diffraction is equal to or more than 45 nm (450Å). Typically, one iron crystal grain is an aggregate of a plurality of crystallites. A crystallite is a maximum group of microcrystals which can be deemed as a single crystal.

The present inventors made trial and error in regard of the electrolytic iron foil 10 of the present embodiment by varying the electroplating conditions used in manufacturing the electrolytic iron foil, conditions of a heat treatment conducted later, and the like. As a result, the present inventors have found out that, in the case where the crystallite diameter is set to a predetermined size, it is possible to obtain an electrolytic iron foil which has sufficient elongation for enduring repeated charging and discharging even when applied to a current collector of a secondary battery.

In the present embodiment, the reason for setting the crystallite diameter on (110) plane of iron contained to a value equal to or more than 45 nm is as described below.

Specifically, in the present embodiment, it is an object to provide an iron foil which has such a thickness as to be applicable to a current collector and which has elongation and strength.

Here, if the iron foil should be manufactured by rolling, the crystallite diameter is reduced due to working distortion, making it difficult to obtain an iron foil having elongation.

On the other hand, controlling the crystallite diameter on (110) plane of iron in at least either one surface in the electrolytic iron foil 10 to a value equal to or more than 45 nm makes it possible to cause the foil to have intended elongation and strength. Therefore, in the present embodiment, the crystallite diameter in the electrolytic iron foil 10 is set to be equal to or more than 45 nm.

Note that an upper limit for the crystallite diameter is preferably equal to or less than 160 nm, more preferably equal to or less than 150 nm, and further preferably equal to or less than 120 nm.

Note that, from the viewpoint of more enhancing elongation, the crystallite diameter is preferably equal to or more than 50 nm, more preferably equal to or more than 58 nm, further preferably equal to or more than 60 nm, and still further preferably equal to or more than 80 nm. On the other hand, in the case of focusing on strength, the crystallite diameter is preferably less than 60nm, and more preferably less than 58 nm. In addition, in the case of securing both strength and elongation in a balanced manner, the crystallite diameter is preferably 50 to 80 nm, and more preferably 58 to 75 nm.

In the electrolytic iron foil 10 of the present embodiment, crystallite diameter on (110) plane of iron is defined. The reason is as follows; iron has a body-centered cubic (BCC) structure, and controlling the crystallite diameter on (110) plane which is a main slide plane makes it possible to accurately control elongation of the electrolytic iron foil as a whole.

In the electrolytic iron foil 10 of the present embodiment, the crystallite diameter on (110) plane of iron is obtained a from peak half-value width of X-ray diffraction with use of the following formula. Measurement of X-ray diffraction is performed, for example, by use of a known X-ray diffraction device. For calculation of the crystallite diameter, a peak of (110) plane of iron appearing at $2\theta$ - 43° to 46° is used.

$$D = K \times \lambda / (\beta \times \cos\theta)$$

D: crystallite diameter

K: Scherrer constant (K = 0.94 is used)
$\lambda$: wavelength of X-ray used
$\beta$: half-value width of diffraction X-ray of crystallite
$\theta$: Bragg angle

In the electrolytic iron foil 10 of the present embodiment, controlling the crystalline orientation index on (110) plane of iron makes it possible to obtain an electrolytic iron foil having elongation and strength. Specifically, it is as follows.

That is, as a crystalline orientation index, from the viewpoint of obtaining sufficient elongation, the crystalline orientation index on (110) plane which is a slide plane of the BCC structure is preferably equal to or more than 0.2 in both surfaces of the electrolytic iron foil. Note that from the viewpoint of enhancing elongation, the crystalline orientation index on (110) plane in at least either one surface is more preferably equal to or more than 0.4, and further preferably equal to or more than 0.7. Note that an upper limit for the crystalline orientation index on (110) plane is not particularly present, and it is normally equal to or less than 3.0.

In addition, from the viewpoint of more enhancing elongation, the crystalline orientation index on (220) plane in at least either one surface is preferably equal to or more than 0.5, more preferably equal to or more than 1.0, further preferably equal to or more than 1.3, and still further preferably equal to or more than 1.5. In the case where more focus is placed on elongation, the crystalline orientation index on (220) plane in both surfaces is particularly preferably equal to or more than 1.3. Note that an upper limit for the crystalline orientation index on (220) plane is not particularly present, and it is normally equal to or less than 4.0.

The crystalline orientation index of iron foil can be calculated as follows by Willson and Rogers' method, "literature K. S. Willson and J. A. Rogers; Tech. Proceeding Amer. Electroplaters Soc., 51, 92 (1964)," by measuring a diffraction intensity on each crystal plane in the surface by an X-ray diffraction device and thereafter using diffraction peaks of an iron film obtained and diffraction peaks of a standard powder.

As diffraction intensity data, in the case where the bulb of an X-ray source is Cu (K$\alpha$), those on (110) plane, (200) plane, (211) plane and (220) plane which are considered to appear in the range of a diffraction angle ($2\theta$) of 20° to 100° were used.

Crystalline orientation index of (110) plane =

IF(110)/IFR(110),

where

IF(110) is an X-ray diffraction intensity ratio from (110) plane, and
IFR(110) is a theoretical X-ray diffraction intensity ratio of standard iron (powdery iron).

$$IF(110) = I(110)/[I(110) + I(200) + I(211) + I(220)],$$

and

$$IFR(110) = IR(110)/[IR(110) + IR(200) + IR(211) + IR(220)],$$

where

I(hkl) is the X-ray diffraction intensity from (hkl) plane, and
IR(hkl) is the X-ray diffraction intensity from (hkl) plane described in 01-080-3816 of the database ICDD PDF-2 2014 of standard iron powder.

The crystalline orientation indexes of (200) plane, (211) plane, and (220) plane can also be calculated similarly.

$$\text{Crystalline orientation index of (200) plane} = IF(200)/IFR(200)$$

$$IF(200) = I(200)/[I(110) + I(200) + I(211) + I(220)]$$

$$IFR(200) = IR(200)/[IR(110) + IR(200) + IR(211) + IR(220)]$$

$$\text{Crystalline orientation index of (211) plane} = IF(211)/IFR(211)$$

$$IF(211) = I(211)/[I(110) + I(200) + I(211) + I(220)]$$

$$IFR(211) = IR(211)/[IR(110) + IR(200) + IR(211) + IR(220)]$$

$$\text{Crystalline orientation index of (220) plane} = IF(220)/IFR(220)$$

$$IF(220) = I(220)/[I(110) + I(200) + I(211) + I(220)]$$

$$IFR(220) = IR(220)/[IR(110) + IR(200) + IR(211) + IR(220)]$$

Note that, of the X-ray diffraction intensities of (110) plane, (200) plane, (211) plane and (220) plane obtained, the maximum of diffraction intensities is made to be 100, and relative intensities obtained by dividing the diffraction intensities of other planes by the diffraction intensity value can also be calculated from the same data.

Note that, in the present embodiment, it is sufficient if the crystallite diameter on (110) plane of iron measured by use of X-ray diffraction in at least either one surface is equal to or more than 45 nm. While the electrolytic iron foil has the substrate surface side and the electrolytic side at the time of manufacture, it was found out that the substrate surface side is influenced at the time of start of electrodeposition and that crystallite diameter is somewhat reduced. However, it was confirmed that if a sufficient crystallite diameter of equal to or more than 45 nm can be secured on the electrolytic surface side, the foil is excellent in elongation even when the crystallite diameter on the other surface, that is, on the substrate surface, is equal to or less than 45 nm.

Note that, in the case where the crystallite diameter on (110) plane of iron measured by X-ray diffraction in at least either one surface is equal to or more than 45 nm, from the viewpoint of more enhancing elongation, the crystallite diameter on (110) plane of iron measured from the other surface side is preferably equal to or more than 25 nm, more preferably equal to or more than 35 nm, further preferably equal to or more than 38 nm, still further preferably equal to or more than 45 nm, and particularly preferably equal to or more than 70 nm. On the other hand, in the case where more focus is placed on strength, the crystallite diameter is preferably less than 60 nm, and more preferably less than 45 nm. In addition, in the case where it is intended to secure both higher elongation and strength, the crystallite diameter is preferably 35 to 70 nm, more preferably 38 to 70 nm, and further preferably 35 to 1 nm.

Note that an upper limit for the crystallite diameter is preferably equal to or less than 160 nm, more preferably equal to or less than 150 nm, and further preferably equal to or less than 120 nm.

In the electrolytic iron foil 10 of the present embodiment, as a method for controlling the size of the crystallite diameter, specifically, there may be mentioned a method of controlling the plating conditions used at the time of manufacturing the electrolytic iron foil. Besides, in the case of heat treating the electrolytic iron foil obtained, the size of the crystallite diameter can be controlled also by a method of controlling the heat treatment conditions. These methods in detail will be described later.

As illustrated in FIG. 1, the electrolytic iron foil 10 of the present embodiment has a first surface 10a and a second surface 10b. Note that for convenience of explanation, the surface (substrate surface) that has been in contact with the support (substrate) for supporting the electrolytic foil at the time of manufacturing the electrolytic iron foil 10 is regarded as the first surface 10a, and the other side surface (electrolytic surface) is regarded as the second surface 10b in the following description. Note that in the following, the first surface (10a) will also simply be referred to as the substrate surface, and the second surface 10b will also simply be referred to as the electrolytic surface.

The electrolytic iron foil 10 of the present embodiment may be pure iron, or may contain one kind or two or more kinds of metal other than iron as sub-components or may contain unavoidable impurities. Here, pure iron means an iron in which the content of metallic elements other than iron is equal to or less than 0.1 wt%. With the content of metallic elements other than iron set to 0.1 wt% or below, occurrence of rust is reduced as compared to the rolled iron foil (also called the rolled steel foil) circulated generally. Hence, the electrolytic iron foil 10 has the advantage of being excellent in corrosion resistance and anti-rusting property during transportation, storage, and the like.

In addition, in the present invention, the iron foil is defined as a foil in which the content of iron in the foil is equal to or more than 80 wt%. With the iron content set to be equal to or more than 80 wt% and metal other than iron included as sub-components, the iron foil of the present invention is preferable from the viewpoint of securing both improved strength and cost, while having characteristic properties of iron (strength and elongation).

In the case where the electrolytic iron foil 10 in the present embodiment contains metal other than iron, the metal other than iron includes, for example, nickel, cobalt, molybdenum, phosphor, and boron. From the viewpoint of seeking further enhancement of strength while having characteristic properties of iron (strength and elongation, it is preferable to contain nickel as the metal other than iron. Note that in that case, the nickel content of the foil is preferably equal to or more than 3 wt% but less than 20 wt%, more preferably equal to or more than 3 wt% but less than 18 wt%, and further preferably equal to or more than 5 wt% but less than 16 wt%.

Note that, in the present embodiment, when all the metal contained in the electrolytic iron foil 10 accounts for 100 wt%, the content rate of metal other than iron and nickel is preferably equal to or less than 0.1 wt%.

In the present embodiment, as the method for obtaining the contents of iron and metal other than iron that are contained in the electrolytic iron foil, there can be mentioned, for example, inductively coupled plasma (ICP) emission spectrochemical analysis or the like. In addition, from the content of each metal obtained, content rate of metal can be calculated.

The electrolytic iron foil 10 in the present embodiment is formed by electroplating. Specifically, the electrolytic iron foil can be formed by use of an electroplating bath containing iron ions.

Note that, description will be given with, at the time of manufacturing the electrolytic iron foil of the present embodiment, the surface (substrate surface) that has been in contact with a support (substrate) for supporting the electrolytic foil called the substrate surface and the other surface (electrolytic surface) called the electrolytic surface.

The electrolytic iron foil 10 of the present embodiment may be a plating layer obtained by a gloss agent not being added to the electroplating bath (for the sake of convenience, also called a "mat iron plating layer") or may be a "bright iron plating layer" obtained by a gloss agent (inclusive of a glass agent for semi-bright) being added.

Note that the abovementioned "bright" and "mat" depend on evaluation on visual inspection basis, and classification based on precise numerical values is difficult. Further, the degree of brightness varies depending on other parameters such as a bath temperature described later. Accordingly, "bright" and "mat" used in the present embodiment are mere definitions used in the case where attention is paid to the presence or absence of a gloss agent.

The electrolytic iron foil 10 of the present invention preferably has, in at least either one surface of the substrate surface and the electrolytic surface, a value of a three-dimensional surface texture parameter Sa being less than 1.0 um, more preferably less than 0.6 um, and further preferably equal to or less than 0.45 um .

As a result of the present inventors' examinations, it was found out that, for manufacturing an electrolytic iron foil capable of suppressing the risk of breakage or tearing during manufacturing and during handling (inclusive of assembly of a battery) caused by reduction in film thickness and capable of restraining wrinkling or breakage even in the case where an active material of which volume change is large during repeated charging and discharging of a secondary battery is used, it is more preferable to set the crystallite diameter which is a characteristic of the present invention to a predetermined size and to further set the value of the abovementioned three-dimensional surface texture parameter Sa to be equal to or less than a predetermined value.

The reason is considered to be as follows. That is, in the surface of the metallic foil, in the case where ruggedness is too large, there is a possibility that a locally thinner part is formed according to the combination of ruggedness on the face side and the back side, and there is possibility that tearing or crack of the foil as a whole is liable to occur. Hence, in order to obtain strength and elongation inherent to the foil which is obtained by control of crystallite diameter, it is preferable to set the value of Sa to a predetermined value.

Note that the three-dimensional surface texture parameter Sa in the electrolytic iron foil 10 of the present embodiment can be determined by a known noncontact type three dimensional surface roughness measuring device or the like.

Note that, in the electrolytic iron foil 10 of the present embodiment, each value of Sa [pm] (arithmetical mean height) and Sz [pm] (maximum height) in the substrate surface and the electrolytic surface preferably has the following value. Note that the three-dimensional surface texture parameters in the present embodiment refer to the values measured according to ISO-25178-2:2012 (corresponding JIS B 0681-2:2018)

Sa ⋯ less than 1.0 um, more preferably less than 0.6 um
Sz ⋯ less than 10.0 um, more preferably less than 8.0 um

Here, lower limits for Sa and Sz are not particularly limited to any values, but, normally, Sa is equal to or more than 0.1 um, and Sz is equal to or more than 0.8 um.

In addition, from the viewpoint of active material adhesion, in the electrolytic iron foil 10 of the present embodiment, each value of Sdq (root mean square gradient) and Sdr (developed interfacial area ratio) in at least either one of the substrate surface and the electrolytic surface preferably has the following value. Note that the three-dimensional surface texture parameters in the present embodiment are the values measured according to ISO-25178-2:2012 (corresponding JIS B 0681-2:2018).

Sdq ⋯ equal to or more than 0.06, more preferably equal to or more than 0.10, further preferably equal to or more than 0.20
Sdr ⋯ equal to or more than 0.20%, more preferably equal to or more than 0.50%, further preferably equal to or more than 1.00%

When used as a current collector, from the viewpoint of adhesion with the active material, it is preferable that fine-pitch ruggedness formed by crystal grains of plating be present, and, particularly with the values of Sdq and Sdr falling within the abovementioned ranges, the ruggedness of crystal grains of plating can be made to have a suitable shape. Particularly, with Sdr in at least either one surface set to be equal to or more than 1.00%, more enhancement of adhesion is expected.

An upper limit for Sdq is not particularly present, and it is less than 1. An upper limit for Sdr is not particularly limited to any value, but in the case of being extremely large, there is a possibility that ruggedness is too high, so that it is normally less than 50%.

Note that, for controlling the three-dimensional surface texture parameters Sa, Sz, Sdq, and Sdr in the electrolytic iron foil 10 of the present embodiment to fall within the abovementioned value ranges, there can be mentioned a method of controlling the plating conditions as described later, a method of polishing the surface of the support, a method of controlling ruggedness by subjecting the surface of the electrolytic iron foil obtained to etching treatment, electrolytic polishing, or the like, and the like.

Next, the thickness of the electrolytic iron foil 10 in the present embodiment will be described.

The thickness of the electrolytic iron foil 10 in the present embodiment is characterized by being less than 20 um. A thickness of equal to or more than 20 um does not, in the first place, conform to design idea in view of the background of seeking a higher capacity by reduction in film thickness, and further reduces a cost-basis advantage to known rolled foils and the like.

Note that an upper limit for the thickness of the electrolytic iron foil 10 in the present embodiment is preferably equal to or less than 18 $\mu$m, more preferably equal to or less than 15 um, and further preferably equal to or less than 12 $\mu$m.

A lower limit for the thickness of the electrolytic iron foil 10 in the present embodiment is not particularly limited to any value, but is, for example, preferably 1.5 um. Such viewpoints as strength against the influences caused by charging and discharging and the risk of breakage, tearing, or wrinkling which may occur during manufacturing or handling of a battery can described as the reasons therefor.

Note that the lower limit for the thickness of the electrolytic iron foil 10 in the present embodiment is more preferably equal to or more than 5 $\mu$m.

Note that the "thickness of the electrolytic iron foil" in the present embodiment can be acquired by thickness measurement using a micrometer or by thickness measurement using a gravimetric method.

Note that the tensile strength of the electrolytic iron foil 10 of the present embodiment is preferably equal to or more than 130 MPa. In the case where the tensile strength is less than 130 MPa, there is a possibility of occurrence of tearing, breakage, or the like of the foil during manufacture of a battery, and handling property (handleability) is lowered, which is unfavorable. In addition, when applied to a current collector of a secondary battery, there is a possibility of occurrence of rupture under volume change caused by repeated charging and discharging, which is unfavorable.

Note that, in terms of placing more focus on strength, a lower limit for tensile strength is more preferably equal to or more than 180 MPa, and further preferably equal to or more than 350 MPa. On the other hand, when focus is placed on elongation, tensile strength is preferably equal to or less than 550 MPa, and more preferably equal to or less than 450 MPa. An upper limit for the tensile strength is preferably equal to or less than 800 MPa, and more preferably equal to or less than 700 MPa.

Note that the tensile strength of the electrolytic iron foil 10 in the present embodiment can be measured, for example, as follows. By an SD lever type sample cutter (model: SDL-200) made by DUMBBELL CO., LTD., a metallic piece of JIS K6251 dumbbell No. 4 depicted in FIG. 2 is die-cut by use of a cutter (model: SDK-400) according to JIS K6251. With this specimen, tensile test can be performed in accordance with a tensile test method according to JIS Z 2241 which is a JIS standard of metallic specimen.

Elongation of the electrolytic iron foil 10 of the present embodiment is preferably 1.6% to 15%, more preferably 1.8% to 15%, and further preferably 2.0% to 15%. In the case where elongation is less than 1.6%, when the electrolytic iron foil obtained is applied to a current collector of a secondary battery, it may be impossible to cope with repetitive charging and discharging, which is unfavorable. Note that the elongation of the electrolytic iron foil 10 in the present embodiment refers to the value measured according to JIS Z 2241 (metallic material tensile testing method).

The electrolytic iron foil 10 of the present embodiment has the above-mentioned configuration, and hence, produces the following effects.

In other words, in the step of manufacturing a metallic foil as a current collector, the drying temperature may reach a temperature equal to or higher than 200°C (equal to or lower than 400°C), and a copper foil conventionally used as a current collector material may be lowered in strength due to the drying temperature.

Since iron has such material characteristics that lowering in strength due to the heating temperature band is slight, in the case where the electrolytic iron foil 10 of the present embodiment is used as a current collector, lowering in strength due to heating during manufacturing and during handling (during assembly of a battery and during use as a current collector) can be suppressed.

Note that, in the electrolytic iron foil 10 of the present embodiment, from the viewpoint of making the foil softer and enhancing the adhesion with the active material, the size of crystal grains on the surface (average crystal grain diameter on the surface) in at least either one of the electrolytic surface and the substrate surface is preferably equal to or more than 0.66 um. Particularly, in the case of demanding strong adhesion, the size of crystal grains is more preferably equal to or more than 3.20 um. On the other hand, in the case where more focus is placed on strength with secured adhesion with the active material, the size of crystal grains is preferably less than 1.50 um, and more preferably less than 1.30 um. In addition, in the case where it is desired to secure both strength and elongation in a well-balanced matter while securing adhesion with the active material, the size of crystal grains is preferably 0.80 to 3.20 um, more preferably 1.00 to 3.20 um, and further preferably 1.30 to 3.20 $\mu$m.

Besides, in the case where the average crystal grain diameter on the surface in at least either one of the electrolytic surface and the substrate surface is equal to or more than 0.66 um, from the viewpoint of softening the foil to secure adhesion with the active material, the average crystal grain diameter on the surface in the other surface is preferably equal to or more than 0.45 um, more preferably equal to or more than 0.50 um, further preferably equal to or more than 0.70 um, still further preferably equal to or more than 1.00 um, and particularly preferably equal to or more than 2.00 um. On the other hand, in the case where more focus is placed on strength with secured adhesion with the active material, the average crystal grain diameter is preferably less than 1.00 um, and more preferably less than 0.70 um. In addition, in the case it is desired to secure both higher elongation and strength while securing adhesion with the active material, the average crystal grain diameter is preferably 0.50 to 2.00 um, more preferably 0.70 to 2.00 um, and further preferably 1.00 to 2.00 um.

Note that, in the present embodiment, the "average crystal grain diameter on the surface" is the average crystal grain diameter calculated from the crystal grain located at a position of 0.5 um in the thickness direction from the front surface side (the electrolytic surface side or the substrate surface side), and corresponds to the average line segment length obtained according to JIS G 0551.

The electrolytic iron foil 10 of the present embodiment is favorable from such a viewpoint that controlling the abovementioned crystal grain diameter by a predetermined value enhances adhesion with the active material when used as a current collector.

<<Method of manufacturing electrolytic iron foil 10>>

When the electrolytic iron foil 10 of the present embodiment is manufactured, an iron electroplating is formed on a support including a titanium plate (Ti substrate), a stainless steel plate, or the like, after which the plating layer is peeled off from the support by a known method, whereby the electrolytic iron foil 10 is obtained.

Note that a specific material of the support is not limited to the titanium plate or the stainless steel plate, and other known metallic materials can be applied within such ranges as not to depart from the gist of the present invention.

Note that in the following, the titanium plate will also be referred to as a Ti substrate.

In regard of the iron electroplating bath, the following conditions can be mentioned.

[High-concentration iron plating conditions]

- Bath composition
  Iron chloride tetrahydrate: 500 to 1,000 g/L
- Temperature: 60 to 110°C
- pH: equal to or less than 3.0
- Stirring: air stirring or jet stirring
- Current density: 3 to 100 A/dm$^2$

Note that the pH adjustment can be carried out using hydrochloric acid, sulfuric acid, or the like.

Note that, in the case where the temperature of the abovementioned high-concentration iron plating bath is less than 60°C, there is a possibility that precipitation of a layer cannot be achieved, there is a possibility of peeling off from the support due to an increase in stress at the time of plating, and further, a crystallite diameter is reduced, which are unfavorable. From the viewpoint of enhanced productivity and stable obtainment of a crystallite diameter of a predetermined size, the bath temperature is more preferably equal to or more than 85°C. On the other hand, while an upper limit for the bath temperature is not particularly present, in the case of a bath temperature in excess of 110°C, evaporation of the plating bath is vigorous and productivity is poor, which are unfavorable.

Note that, in regard of the current density in the high-concentration iron plating bath, in the case of a pH of equal to or less than 1.0, it is preferable to set the current density to be equal to or more than 5 A/dm$^2$, from the relation between the dissolution rate of iron and the precipitation rate of iron.

[Low-concentration iron plating conditions]

- Bath composition

  Iron chloride tetrahydrate: 200 to 500 g/L
  Total amount of any one or a plurality of salts of aluminum chloride, calcium chloride, beryllium chloride, manganese chloride, potassium chloride, chromium chloride, lithium chloride, sodium chloride, magnesium chloride, and titanium chloride: 20 to 300 g/L

  Temperature: 25 to 110°C
  pH: equal to or less than 5.0
  Stirring: air stirring or jet stirring
  Current density: 3 to 100 A/dm$^2$

In the case where the current density of low-concentration iron plating is less than 3 A/dm$^2$, there is a possibility that the foil cannot be fabricated, and there is a possibility of lowering in productivity, which are unfavorable. From the viewpoint of enhancing production efficiency, it is more preferable that the current density be equal to or more than 10 A/dm$^2$. On the other hand, in the case where the current density exceeds 100 A/dm$^2$, there is a possibility of occurrence of plating burning and there is a possibility of peeling off from the support due to an increase in stress during plating, which are unfavorable. From the viewpoint of suppression of plating burning and enhancement of productivity, it is more preferable that the current density be equal to or less than 80 A/dm$^2$. In addition, anti-pitting agent may be added in an appropriate amount.

Note that, in regard of the bath composition of the low-concentration iron plating, any of salts of aluminum chloride, calcium chloride, beryllium chloride, manganese chloride, potassium chloride, chromium chloride, lithium chloride, sodium chloride, magnesium chloride, and titanium chloride may be used singly or in combination and added.

In the plating bath at the time of forming the electrolytic iron foil 10 of the present embodiment, nickel may be contained as described above. Adding nickel to the bath makes it possible to enhance strength and corrosion resistance of the foil. Besides, with nickel added to the bath, the current density in the plating conditions can be raised, producing an advantage of enhanced productivity.

In regard of a plating bath in the case of containing nickel, the following conditions can be mentioned.

- Bath composition

  Iron chloride tetrahydrate: 500 to 1,000 g/L
  Nickel chloride hexahydrate or nickel sulfate hexahydrate: 10 to 400 g/L

- Temperature: 60 to 110°C
- pH: equal to or less than 3.0
- Stirring: air stirring or jet stirring
- Current density: 3 to 100 A/dm$^2$

As a method of manufacturing the electrolytic iron foil 10 of the present embodiment, the following steps can be mentioned in general.

First, after the support on which a plating layer is to be formed is subjected to pretreatments of polishing, wiping, water washing, pickling, and the like, the support is immersed in the above-exemplified plating bath, to form an electrolytic iron plating layer on the support. After the thus formed plating layer is dried, it is peeled off to obtain the electrolytic iron foil 10.

In the abovementioned step, the polishing of the pretreatments of the support will be described. When manufacturing the electrolytic iron foil 10 of the present embodiment, the surface shape of the support on which the plating layer is to be formed is substantially transferred to the plating layer, to be the one-side surface (substrate surface) of the electrolytic iron foil. In addition, the shape of the surface (electrolytic surface) of the electrolytic iron foil is also more highly possibly influenced by the surface shape of the support as the thickness of the electrolytic iron foil is thinner.

Specifically, in the case where peeling off from the support is difficult at the time of manufacture and from the viewpoint of suppressing the problem of generation of pinholes during manufacture of a foil, surface roughness Sa of the support is preferably equal to or less than 0.25 um, more preferably equal to or less than 0.20 um, and further preferably equal to or less than 0.18 um. In the case where the plating bath used in forming the electrolytic iron foil contains nickel, surface roughness Sa of the support is particularly preferably equal to or less than 0.16 um. In addition, while a lower limit of surface roughness Sa of the support is not particularly limited to any value, it is preferably equal to or more than 0.01 $\mu$m.

Controlling the surface roughness Sa of the support to the abovementioned value can be achieved, for example, by polishing the surface of the support by use of known means. Here, the polishing method is not particularly limited to any kind; polishing may be conducted in a specific direction such as a widthwise direction or a lengthwise direction of the support, or may be conducted at random.

In the case where the electrolytic iron foil is subjected to a heat treatment, before or after peeling off the electrolytic iron foil from the support, the heat treatment conditions are preferably in such ranges that the problem of the present invention can be solved. For example, in the case where the electrolytic iron foil 10 is pure iron, temperature as a heat treatment condition is preferably 150°C to 850°C, more preferably 200°C to 700°C, and further preferably 250°C to 600°C. In addition, in the case where the electrolytic iron foil 10 contains one or more kinds of metal other than iron (nickel or the like) as a sub-component, temperature as a heat treatment condition is preferably 150°C to 600°C, more preferably 200°C to 500°C, and further preferably 250°C to 400°C. Note that, in the case where heat treatment is conducted in the abovementioned temperature range, time of the heat treatment is not particularly limited to any length, but a soaking time is preferably in the range of 1.5 to 20 hours (the total time of heating, soaking, and cooling times is in the range of 4 to 80 hours). The heat treatments falling within the abovementioned ranges is preferable from the viewpoint of crystallite diameter on (110) plane of iron which is a characteristic of the present disclosure and from the viewpoint of securing thinness, elongation, and strength which are challenges of the present disclosure.

Before or after peeling off the electrolytic iron foil from the support, the outermost layer surface of the electrolytic iron foil may be subjected to a roughening treatment or an anti-rusting treatment, for example, in such ranges that the problem of the present invention can be solved. In addition, a known treatment for imparting conductivity, such as carbon coating, may be applied.

For example, provision of a nickel roughening layer or a copper roughening layer on both surfaces of the electrolytic iron foil is favorable since it is thereby possible to enhance adhesion with the active material when the electrolytic iron foil is used as a current collector. Note that the roughening layer is disclosed, for example, in PCT Patent Publication No. WO2020/017655, so that detailed description thereof is omitted.

In the present embodiment, as a method for controlling the surface roughness (three-dimensional surface texture) of the electrolytic iron foil, a method of controlling the plating conditions as described above and a method of polishing the surface of the support have been mentioned, but these are non-limitative. For example, a desired three-dimensional surface texture can be obtained by a method of smoothing the surface of the electrolytic iron foil itself by etching treatment or electrolytic polishing or the like.

Note that, in the present embodiment, an example of manufacturing the electrolytic iron foil by a system for continuous manufacture with use of the support (for example, drum system or roll-to-roll system) has been described, but the present invention is not limited to this mode, and, for example, batch type manufacture with use of a cut plate can also be applied.

The electrolytic iron foil 10 in the present embodiment can be a laminated electrolytic foil having at least one metallic layer on at least one of the substrate surface and the electrolytic surface. In this case, examples of the metallic layer include layers of Cu, Ni, Co, Zn, Sn, Cr, and alloys thereof. Particularly, the metallic layer may be a nickel-iron alloy layer, to obtain a laminated electrolytic foil of the electrolytic iron foil 10 of the present embodiment and the nickel-iron alloy layer.

<<Examples>>

The present invention will be described more specifically by illustrating Examples. First, measuring methods in Examples will be described.

[Measurement of crystallite diameter]

For measurement of crystallite diameter, X-ray diffraction was conducted with use of an X-ray diffraction device (full-automatic multipurpose horizontal X-ray diffraction device SmartLab, made by Rigaku Corporation).

<Device configuration>

- X-ray source: CuK$\alpha$
- Goniometer radius: 300 nm

- Optical system: concentration method
  (Incidence side slit system)
- Solar slit: 5°
- Longitudinal limiting slit: 5 mm
- Divergence slit: 2/3°
  (light reception side slit system)
- Scattering slit: 2/3°
- Solar slit: 5°
- Light reception slit: 0.3 mm
- Monochromatic processing method: counter monochromator method
- Detector: scintillation counter <Measurement parameters>
- Tube voltage-tube current: 45 Kv 200 mA
- Scanning axis: 2θ/θ
- Scanning mode: continuous
- Measuring range: 2θ 20° to 100°
- Scanning speed: 10°/min
- Step: 0.05°

A specimen was die-cut from the electrolytic iron foil obtained, and the specimen was placed on a measurement specimen support. In each of the electrolytic surface and the substrate surface, the range of X-ray diffraction angle 2θ = 20° to 100° was subjected to X-ray diffraction measurement by a reflection method. Thereafter, the measured value obtained was subjected to background removal with use of an integrated X-ray powder diffraction software PDXL made by Rigaku Corporation, and crystallite diameter was calculated according to the following formula.

Note that, as peaks on (110) plane of iron, peaks appearing in the range of 2θ = 43° to 46° were used. The crystallite diameters obtained are set forth in Table 2.

$$D = K \times \lambda / (\beta \times \cos\theta)$$

D: crystallite diameter

K: Scherrer constant (K = 0.94 was used)
λ: wavelength of X-ray used
β: half-value width of diffraction X-ray of crystallite

θ: Bragg angle

[Measurement of crystalline orientation index]

A crystalline orientation index of the electrolytic iron foil was calculated by application of the Willson and Rogers' method to the measured value obtained by the X-ray diffraction device. The results are set forth in Tables 2 and 3.

[Measurement of tensile strength and elongation]

The electrolytic foil obtained was subjected to measurement of tensile strength and elongation as follows. First, by an SD lever type sample cutter (model: SDL-200) made by DUMBBELL CO., LTD., a metallic piece was die-cut with use of a cutter (model: SDK-400) according to JIS K6251-4. Next, this specimen was subjected to a tensile test in accordance with a tensile test method according to JIS Z 2241 which is a JIS standard for metallic specimen. A schematic view of the specimen is depicted in FIG. 2.

Note that as a device for tensile test, a tensile testing machine (universal material testing machine; TENSILON RTC-1350A; made by ORIENTEC CORPORATION) was used. In addition, the measurement conditions were room temperature and a tensile speed of 10 mm/min.

Elongation was calculated by the following formula.

$$\text{(Moving distance (stroke) of testing machine)} / \text{(original gage length)} \times 100$$

In addition, the maximum testing force in the tensile test is set forth in the table as maximum load [N]. The results are set forth in Table 3.

[Measurement of thickness]

The electrolytic foil obtained was subjected to measurement of thickness with use of a micrometer. The thus obtained value is set forth in the column "measured thickness" in Table 1.

[Measurement of surface shape]

In the electrolytic foil obtained, the surface that has been in contact with the support was regarded as the substrate surface and the surface on the other side was regarded as the electrolytic surface, and a surface shape of each surface was measured. Specifically, by use of a laser microscope OLS5000 made by Olympus Corporation, the value of the three-dimensional surface texture parameter Sa [pm] (arithmetical mean height) was measured. Note that, in the present embodiment, the three-dimensional surface texture parameter is the value measured according to ISO-25178-2:2012 (corresponding JIS B-0681-2:2018).
As a measuring method, an objective lens with a magnifying power of 50 (lens name: MPLAPON50XLEXT) was used to scan three visual fields (one visual field: 258 um × 258 μm), to thereby obtain analysis data. Next, the thus obtained analysis data was subjected to noise reduction and gradient correction which are automatic correction treatments by use of an analysis application. Thereafter, an icon of surface roughness measurement was clicked to perform analysis, to thereby obtain various parameters of surface roughness (the value of Sa set forth in Table 2 is an average of the three visual fields). Note that filter conditions (F calculation, S filter, L filter) in the analysis were not all set, and analysis was conducted in the condition of absence of filter condition. The results are set forth in Table 2.

[Measurement of crystallite diameter on surface]

Measurement of the crystallite diameter on the surface was conducted with use of the following device under the following conditions.

FIB device: focused ion beam processing observation device (FIB), made by JEOL Ltd.)
Ion beam acceleration voltage: 30 kV
Emission current: 2.0 μA

As an FIB operation method, a specimen was die-cut from the electrolytic iron foil, and the specimen was placed on a measurement specimen support, with the electrolytic surface on the upper side. With the processing magnification set to 2,000, the specimen surface was subjected to carbon coating by deposition processing. Thereafter, the specimen was processed into a rectangular shape with use of the above as the processing conditions. After the processing, the specimen support was inclined by 30°, and a section image (magnifying power 3,000 to 10,000) of the electrolytic iron foil was obtained.
Calculation of the average crystal grain diameter on the surface was conducted by obtaining an average line segment length per crystal grain of a testing line crossing the crystal grain by a cutting method described in JIS G 0551. First, on a section image of the electrolytic iron foil obtained by surface processing of FIB, a testing line consisting of a straight line of length L (10.0 to 40.0 μm) crossing the crystal grains was drawn in a horizontal direction at positions of 0.5 um from the surface layers on the electrolytic surface side and the substrate surface side, and the number of crystal grains, nL, crossed by the testing line consisting of the straight line was counted. Note that, at an end of the testing line, in the case where the testing line is ended inside a crystal grain, the crystal grain was counted as 1/2. Further, an average crystal grain diameter

$\overline{l}$

was obtained by use of the following formula. It is to be noted that a twin crystal is neglected and counted as one crystal grain.
Note that FIG. 3 is a diagram for obtaining the average crystal grain diameter in Example 1. In Example 1, the length L = 12.9 um, the number of crystal grains on the electrolytic surface nL = 15, and the number of crystal grains on the substrate surface nL = 21. Hence, the crystal grain diameters on the electrolytic surface side and the substrate surface side are calculated to be 0.86 um and 0.61 um, respectively. The results are set forth in Table 5.

[Math. 1]

$$\overline{l} = L/nL$$

[Manufacture of negative electrode plate and evaluation of active material adhesion]

With use of artificial graphite (grain diameter: approximately 10 um) as a negative electrode active material and polyvinylidene fluoride (PVDF) as a binder, to a mixture of 97 wt% of the negative electrode active material and 3 wt% OF the binder, an appropriate amount of N-methylpyrrolidone (NMP) was added to produce a negative electrode compound paste adjusted in viscosity. The negative electrode compound paste was applied to the electrolytic surface side of the electrolytic foil, and was dried. In this instance, application was conducted such that, after drying, the total mass of the negative electrode active material and the binder was 5 mg/cm$^2$. Thereafter, by use of a manual hydraulic pump (model: P-1B-041) made by RIKEN SEIKI, pressing was conducted at 1,000 kg/cm$^2$, to produce a negative electrode plate.

Evaluation of the active material adhesion was conducted by a 180° folding test of the negative electrode plate produced as above, with the coated surface on the outside, and the presence or absence of peeling off of the negative electrode active material was checked. The results are set forth in Table 5.

At the folded part,

the case where peeling off of the active material is absent is evaluated as A+,
the case where exposure of the substrate cannot be confirmed at the folded part by visual inspection but peeling off is present only at a part is evaluated as A,
the case where exposure of the substrate can be confirmed at the folded part by visual inspection and peeling off is present at parts is evaluated as B, and
the case where the active material peels off at the folded part and therearound and the exposure of the substrate is confirmed by visual inspection is evaluated as C.

<Example 1>

An electrolytic iron plating was formed on a support. Specifically, a Ti substrate was used as the support on an upper surface on which the electrolytic iron foil is to be formed, and a surface of the Ti substrate was polished, to set the surface roughness Sa of the Ti substrate to the value in Table 1. The direction of the polishing was substantially parallel to the lengthwise direction of the Ti substrate (moving forward direction at the time of continuous manufacture, longitudinal direction). The Ti substrate was subjected to known pretreatments such as pickling using 7 wt% sulfuric acid and water washing. Next, the pretreated Ti substrate was immersed in the following iron plating bath to perform electrodeposition, thereby forming on the Ti substrate an electrolytic iron plating layer of the thickness set forth in Table 1 as an electrolytic foil.

[Iron plating conditions]

- Bath composition
  Iron chloride tetrahydrate: 725 g/L
- Temperature: 90°C
- pH: 1.0
- Stirring: air stirring
- Current density: 10 A/dm$^2$

After the plating layer formed as above was sufficiently dried, the plating layer was peeled off from the Ti substrate to obtain the electrolytic iron foil.

The electrolytic iron foil thus obtained was subjected to measurement of crystallite diameter, measurement of crystalline orientation index, calculation of relative strength of the electrolytic surface and the substrate surface, measurement of tensile strength and elongation, measurement of thickness, measurement of surface shape (Sa) of the electrolytic surface and the substrate surface, measurement of crystal grain diameter, and evaluation of adhesion with the active material.

Note that the content rates of Fe and Mn of the electrolytic iron foil were Fe: equal to or more than 99.9 wt% and Mn: less than 0.01 wt%, that is, the foil was pure iron. By the Mn content rate, it was confirmed that the foil obtained was not a rolled iron foil (see discrimination method A described later). The content rates of Fe and Mn were values obtained by calculation. In calculation, first, the electrolytic iron foil of Example 1 was dissolved, and content of Mn was measured by use of ICP emission analysis (measuring device: inductively coupled plasma emission spectroscopic analysis device ICPE-9000, made by SHIMADZU CORPORATION). In this instance, the remaining other than Mn was deemed as Fe, whereby Fe content was calculated. Based on the contents of Fe and Mn, the content rate of each metal was calculated.

In addition, the observation magnification at the time of measurement of the crystal grain diameter on the surface was set to 10,000. The results are set forth in Tables 1 to 5.

<Example 2>

A process similar to that of Example 1 was conducted, except that the thickness was set as set forth in Table 1. Note that the observation magnification at the time of measurement of the crystal grain diameter on the surface was set to 10,000. The results are set forth in Tables 1 to 5.

<Example 3>

A process similar to that of Example 1 was conducted, except that the thickness was set as set forth in Table 1, to obtain the electrolytic iron foil. The electrolytic iron foil obtained was subjected to annealing with temperature and time as set forth in Table 1 by box annealing. Note that the observation magnification at the time of measurement of the crystal grain diameter on the surface was set to 10,000. The results are set forth in Tables 1 to 5.

<Example 4>

A process similar to that of Example 1 was conducted, except that the thickness was set as set forth in Table 1 and the surface roughness Sa of the Ti substrate which is the support was set to have the value as set forth in Table 1, to obtain an electrolytic iron foil. The electrolytic iron foil thus obtained was subjected to annealing with temperature and time as set forth in Table 1 by box annealing. Note that the observation magnification at the time of measurement of the crystal grain diameter on the surface was set to 10,000. The results are set forth in Tables 1 to 5.

<Example 5>

An electrolytic iron foil obtained as in Example 2 was subjected to annealing with temperature and time as set forth in Table 1 by box annealing. Note that the observation magnification at the time of measurement of the crystal grain diameter on the surface was set to 2,000. The results are set forth in Tables 1 to 5.

<Example 6>

The Ti substrate pretreated as in Example 1 was immersed in the following iron plating bath and electrodeposition was performed, whereby an electrolytic iron plating layer of a thickness as set forth in Table 1 was formed on the Ti substrate as an electrolytic foil.

- Bath composition

　　　Iron chloride tetrahydrate: 725 g/L
　　　Nickel chloride hexahydrate: 75 g/L

　　Temperature: 90°C
　　pH: 1.0
　　Stirring: air stirring
　　Current density: 20 A/dm$^2$

Note that the content rates of Fe, Ni, and Mn in the electrolytic iron foil were Fe: 93.1 wt%, Ni: 6.9 wt%, and Mn: less than 0.01 wt%, that is, the foil was an iron foil containing nickel as a sub-component. By the Mn content rate, it could be confirmed that the obtained foil is not a rolled foil (see discrimination method A described later). The content rates of Fe, Ni, and Mn are values obtained by calculation. In calculation, first, the electrolytic iron foil of Example 6 was dissolved, and the contents of Ni and Mn were measured by ICP emission analysis (measuring device: inductively coupled plasma emission spectroscopic analysis device ICPE-9000, made by SHIMADZU CORPORATION). In this instance, the remaining other than Ni and Mn was deemed as Fe, and Fe content was calculated. Based on the contents of Fe, Ni, and Mn, the content rate of each metal was calculated.

In addition, the observation magnification at the time of measurement of the crystal grain diameter on the surface was set to 10,000. The results are set forth in Tables 1 to 5.

<Example 7>

A process similar to that of Example 6 was conducted, except that the surface roughness Sa of the Ti substrate which is a support was set to the value as set forth in Table 1, to obtain an electrolytic iron foil.

Note that the observation magnification at the time of measurement of the crystal grain diameter on the surface was set to 10,000. The results are set forth in Tables 1 to 5.

<Example 8>

A process similar to that of Example 6 was conducted, except that the thickness was set as set forth in Table 1. Note that the observation magnification at the time of measurement of the crystal grain diameter on the surface was set to 10,000. The results are set forth in Tables 1 to 5.

<Example 9>

The electrolytic iron foil obtained as in Example 8 was subjected to annealing with temperature and time as set forth in Table 1 by box annealing.

Note that the observation magnification at the time of measurement of the crystal grain diameter on the surface was set to 10,000. The results are set forth in Tables 1 to 5.

<Example 10>

A Ti substrate pretreated as in Example 1 was immersed in the following iron plating bath and electrodeposition was performed, whereby an electrolytic iron plating layer of a thickness as set forth in Table 1 was formed on the Ti substrate as an electrolytic foil. Note that the surface roughness Sa of the Ti substrate which is a support was set to the value as set forth in Table 1.

- Bath composition

    Iron chloride tetrahydrate: 300 g/L
    Aluminum chloride hexahydrate: 180 g/L

- Temperature: 90°C
- pH: 1.0
- Stirring: air stirring
- Current density: 3 A/dm$^2$

Note that the observation magnification at the time of measurement of the crystal grain diameter on the surface was set to 10,000. The results are set forth in Tables 1 to 5.

<Example 11>

A process similar to that of Example 10 was conducted, except that the current density was set to the value set forth in Table 1. Note that the observation magnification at the time of measurement of the crystal grain diameter on the surface was set to 10,000. The results are set forth in Tables 1 to 5.

<Example 12>

A process similar to that of Example 10 was conducted, except that the surface roughness Sa of the Ti substrate which is a support was set to the value set forth in Table 1. Note that the observation magnification at the time of measurement of the crystal grain diameter on the surface was set to 10,000. The results are set forth in Tables 1 to 5.

<Example 13>

A process similar to that of Example 10 was conducted, except that the current density and the surface roughness Sa of the Ti substrate which is a support were set to the values set forth in Table 1. The results are set forth in Table 1. Note that the observation magnification at the time of measurement of the crystal grain diameter on the surface was set to 10,000. The results are set forth in Tables 1 to 5.

<Example 14>

A process similar to that of Example 10 was conducted, except that the thickness and the current density were set to the values set forth in Table 1. Note that the observation magnification at the time of measurement of the crystal grain diameter on the surface was set to 7,000. The results are set forth in Tables 1 to 5.

<Example 15>

A process similar to that of Example 10 was conducted, except that the current density, the thickness, and the surface roughness Sa of the Ti substrate which is a support were set to the values set forth in Table 1. The results are set forth in Table 1. Note that the observation magnification at the time of measurement of the crystal grain diameter on the surface was set to 7,000. The results are set forth in Tables 1 to 5.

<Example 16>

A Ti substrate pretreated as in Example 1 was immersed in the following iron plating bath and electrodeposition was performed, whereby an electrolytic iron plating layer of the thickness set forth in Table 1 was formed on the Ti substrate as an electrolytic foil. Note that the surface roughness Sa of the Ti substrate which is a support was set to the value set forth in Table 1.

- Bath composition

    Iron chloride tetrahydrate: 400 g/L
    Calcium chloride: 180 g/L
    Sodium saccharin: 3 g/L
    Sodium dodecylsulfate: 0.1 g/L
    Sodium gluconate:: 2 g/L

- Temperature: 90°C
- pH: 1.5
- Stirring: air stirring
- Current density: 5 A/dm$^2$

Note that the observation magnification at the time of measurement of the crystal grain diameter on the surface was set to 10,000. The results are set forth in Tables 1 to 5.

<Example 17>

A process similar to that of Example 16 was conducted, except that the current density and the surface roughness Sa of the Ti substrate which is a support were set to the values set forth in Table 1. The results are set forth in Table 1. Note that the observation magnification at the time of measurement of the crystal grain diameter on the surface was set to 10,000. The results are set forth in Tables 1 to 5.

<Example 18>

A process similar to that of Example 16 was conducted, except that the surface roughness Sa of the Ti substrate which is a support was set to the value set forth in Table 1. The results are set forth in Table 1. Note that the observation magnification at the time of measurement of the crystal grain diameter on the surface was set to 10,000. The results are set forth in Tables 1 to 5.

<Example 19>

A process similar to that of Example 16 was conducted, except that the current density and the surface roughness Sa of the Ti substrate which is a support were set to the values set forth in Table 1. The results are set forth in Table 1. Note that the observation magnification at the time of measurement of the crystal grain diameter on the surface was set to 10,000. The results are set forth in Tables 1 to 5.

<Example 20>

A Ti substrate pretreated as in Example 1 was immersed in the following iron plating bath and electrodeposition was performed, whereby an electrolytic iron plating layer of the thickness set forth in Table 1 was formed on the Ti substrate as an electrolytic foil.

- Bath composition
  Iron chloride tetrahydrate: 1,000 g/L
- Temperature: 90°C
- pH: equal to or less than 1.0
- Stirring: air stirring
- Current density: 10 A/dm$^2$

Note that the observation magnification at the time of measurement of the crystal grain diameter on the surface was set to 10,000. The results are set forth in Tables 1 to 5.

<Example 21>

A process similar to that of Example 20 was conducted, except that the current density and the thickness were set to the values set forth in Table 1. Note that the observation magnification at the time of measurement of the crystal grain diameter on the surface was set to 6,000. The results are set forth in Tables 1 to 5.

<Example 22>

A process similar to that of Example 20 was conducted, except that the thickness was set to the value set forth in Table 1. Note that the observation magnification at the time of measurement of the crystal grain diameter on the surface was set to 7,000. The results are set forth in Tables 1 to 5.

<Example 23>

A process similar to that of Example 20 was conducted, except that the current density and the thickness were set to the values set forth in Table 1. Note that the observation magnification at the time of measurement of the crystal grain diameter on the surface was set to 7,000. The results are set forth in Tables 1 to 5.

<Example 24>

Continuous electrodeposition was conducted while current density was modified as illustrated in Table 1 during electroplating. In other words, as indicated by "lower 5/upper 15" in Table 1, after a lower layer with a target thickness of 1 um was formed with 5 A/dm$^2$, an upper layer was formed with 15 A/dm$^2$, with the thickness being set as set forth in Table 1. In other points, a similar process to that of Example 20 was conducted. Note that the observation magnification at the time of measurement of the crystal grain diameter on the surface was set to 8,000. The results are set forth in Tables 1 to 5.

<Example 25>

Continuous electrodeposition was conducted while current density was modified as in Example 24 as illustrated in Table 1 during electroplating. In other words, as indicated by "lower 5/upper 15" in Table 1, after a lower layer of a target thickness of 5 um was formed with 5 A/dm$^2$, an upper layer was formed with 5 A/dm$^2$, with the thickness being set as set forth in Table 1. In other points, a similar process to that of Example 20 was conducted. Note that the observation magnification at the time of measurement of the crystal grain diameter on the surface was set to 7,000. The results are set forth in Tables 1 to 5.

<Example 26>

Continuous electrodeposition was conducted while current density was modified as illustrated in Table 1 during electroplating. In other words, as indicated by "lower 15/upper 5" in Table 1, after a lower layer of a target thickness of 10 um was formed with 15 A/dm$^2$, an upper layer was formed with 5 A/dm$^2$, with the thickness being set as set forth in Table 1. In other points, a similar process to that of Example 20 was conducted. Note that the observation magnification at the time of measurement of the crystal grain diameter on the surface was set to 7,000. The results are set forth in Tables 1 to 5.

<Examples 27>

The electrolytic iron foil obtained as in Example 20 was subjected to annealing with temperature and time as set forth in Table 1 by box annealing. Note that the observation magnification at the time of measurement of the crystal grain diameter on the surface was set to 3,000. The results are set forth in Tables 1 to 5.

<Example 28>

An electrolytic iron foil obtained as in Example 22 was subjected to annealing with temperature and time as set forth in Table 1 by box annealing. Note that the observation magnification at the time of measurement of the crystal grain diameter on the surface was set to 7,000. The results are set forth in Tables 1 to 5.

<Example 29>

An electrolytic iron foil obtained as in Example 22 was subjected to annealing with temperature and time as set forth in Table 1 by box annealing. Note that the observation magnification at the time of measurement of the crystal grain diameter on the surface was set to 7,000. The results are set forth in Tables 1 to 5.

<Example 30>

An electrolytic iron foil obtained as in Example 22 was subjected to annealing with temperature and time as set forth in Table 1 by box annealing. Note that the observation magnification at the time of measurement of the crystal grain diameter on the surface was set to 3,000. The results are set forth in Tables 1 to 5.

<Example 31>

A Ti substrate pretreated as in Example 1 was immersed in an iron plating bath as follows and electrodeposition was performed, whereby an electrolytic iron plating layer of a thickness set forth in Table 1 was formed on the Ti substrate as an electrolytic foil. Note that the surface roughness Sa of the Ti substrate which is a support was set to the value set forth in Table 1.

- Bath composition
  Iron chloride tetrahydrate: 1,000 g/L
- Temperature: 105°C
- pH: 1.0
- Stirring: air stirring
- Current density: 50 A/dm$^2$

Note that the observation magnification at the time of measurement of the crystal grain diameter on the surface was set to 10,000. The results are set forth in Tables 1 to 5.

<Examples 32 and 33>

A process similar to that of Example 31 was conducted, except that the thickness was made to have the value set forth in Table 1. Note that the observation magnification at the time of measurement of the crystal grain diameter on the surface was set to 7,000. The results are set forth in Tables 1 to 5.

<Example 34>

A Ti substrate pretreated as in Example 1 was immersed in an iron plating bath as follows and electrodeposition was performed, whereby an electrolytic iron plating layer of a thickness set forth in Table 1 was formed on the Ti substrate as an electrolytic foil.

- Bath composition

   Iron chloride tetrahydrate: 500 g/L
   Nickel chloride hexahydrate: 200 g/L

- Temperature: 100°C
- pH: 1.0
- Stirring: air stirring
- Current density: 20 A/dm$^2$

Note that the content rates of Fe, Ni, and Mn in the electrolytic iron foil were Fe: 86.0 wt%, Ni: 14.0 wt%, and Mn: less than 0.01 wt%. The content rates of Fe, Ni, and Mn are numerical values obtained by calculation. In calculation, first, the electrolytic iron plating foil of Example 34 was dissolved, and contents of Ni and Mn were measured by ICP emission analysis (measuring device: inductively coupled plasma emission spectrochemical analysis device ICPE-9000 made by SHIMADZU CORPORATION). In this instance, the remaining other than Ni and Mn was deemed as Fe, and Fe content was calculated. Based on the contents of Fe, N, and Mn, the content rate of each metal was calculated.
Note that the observation magnification at the time of measurement of the crystal grain diameter on the surface was set to 10,000. The results are set forth in Tables 1 to 5.

<Example 35>

An electrolytic iron foil obtained as in Example 34 was subjected to annealing with temperature and time as set forth in Table 1 by box annealing.
Note that the observation magnification at the time of measurement of the crystal grain diameter on the surface was set to 10,000. The results are set forth in Tables 1 to 5.

<Comparative Example 1>

A process similar to that of Example 1 was conducted, except that the surface roughness Sa of the Ti substrate which is a support was set to the value set forth in Table 1. Note that the observation magnification at the time of measurement of the crystal grain diameter on the surface was set to 10,000. The results are set forth in Tables 1 to 5.

<Comparative Example 2>

A rolled iron foil (model: FE-223171 made by The Nilaco Corporation) of the thickness as set forth in Table 1 was used.
Note that the content rates of Fe and Mn in the rolled iron foil were Fe: 99.67 wt% and Mn: equal to or more than 0.33 wt%. The content rates of Fe and Mn are numerical values obtained by calculation. In calculation, first, the rolled iron foil of Comparative Example 2 was dissolved, and the content of Mn was measured by ICP emission analysis (measuring device: inductively coupled plasma emission spectrochemical analysis device ICPE-9000 made by SHIMADZU CORPORATION). In this instance, the remaining other than Mn was deemed as Fe, and the content of Fe was calculated. Based on the contents of Fe and Mn, the content rate of each metal was calculated.
Note that the observation magnification at the time of measurement of the crystal grain diameter on the surface was set to 10,000. The results are set forth in Tables 1 to 5.

<Comparative Example 3>

Under the following plating conditions, an electrolytic copper foil was formed on a Ti substrate. The thickness and the surface roughness Sa of the Ti substrate were set as set forth in Table 1..

- Bath composition

    Copper sulfate pentahydrate: 200 g/L
    Sulfuric acid: 45 g/L

- Temperature: 35°C
- pH: equal to or less than 1.0
- Stirring: air stirring
- Current density: 10 A/dm$^2$

Note that the observation magnification at the time of measurement of the crystal grain diameter on the surface was set to 10,000. The results are set forth in Tables 1 to 5.

<Comparative Example 4>

An electrolytic copper foil obtained as in Comparative Example 3 was subjected to annealing with temperature and time as set forth in Table 1 by box annealing. Note that the observation magnification at the time of measurement of the crystal grain diameter on the surface was set to 10,000. The results are set forth in Tables 1 to 5.

[Table 1]

|  | Plating conditions | | | Tisubstrate su rface roughness Sa [$\mu$m] | Annealing conditbns |
|  | Kind of metal | Current density [A/dm $^2$] | Measured th ckness [$\mu$m] |  |  |
| Example 1 | Fe | 10 | 6.1 | 0.1 | Not conducted |
| Example 2 | Fe | 10 | 10.1 | 0.1 | Not conducted |
| Example 3 | Fe | 10 | 5.7 | 0.1 | 600°C 4h |
| Example 4 | Fe | 10 | 5.5 | 0.2 | 600°C 4h |
| Example 5 | Fe | 10 | 10.4 | 0.1 | 300°C 4h |
| Example 6 | Fe, Ni | 20 | 6.7 | 0.1 | Not conducted |
| Example 7 | Fe, Ni | 20 | 5.9 | 0.2 | N ot conducted |
| Example 8 | Fe, Ni | 20 | 11.0 | 0.1 | Not conducted |
| Example 9 | Fe, Ni | 20 | 11.6 | 0.1 | 300°C 4h |
| Example 10 | Fe | 3 | 11.5 | 0.05 | Not conducted |
| Example 11 | Fe | 5 | 11.6 | 0.05 | Not conducted |
| Example 12 | Fe | 3 | 13.3 | 0.1 | Not conducted |
| Example 13 | Fe | 5 | 11.7 | 0.1 | Not conducted |
| Example 14 | Fe | 3 | 18.7 | 0.1 | Not conducted |
| Example 15 | Fe | 5 | 16.8 | 0.1 | Not conducted |
| Example 16 | Fe | 5 | 11.2 | 0.05 | Not conducted |
| Example 17 | Fe | 3 | 11.4 | 0.1 | Not conducted |
| Example 18 | Fe | 5 | 11.6 | 0.1 | Not conducted |
| Example 19 | Fe | 10 | 11.7 | 0.1 | Not conducted |
| Example 20 | Fe | 10 | 10.3 | 0.1 | N ot conducted |

(continued)

| | Plating conditions | | | Tisubstrate su rface roughness Sa [$\mu$m] | Annealing conditbns |
|---|---|---|---|---|---|
| | Kind of metal | Current density [A/dm$^2$] | Measured th ckness [$\mu$m] | | |
| Example 21 | Fe | 5 | 18.7 | 0.1 | Not conducted |
| Example 22 | Fe | 10 | 16.4 | 0.1 | Not conducted |
| Example 23 | Fe | 15 | 16.3 | 0.1 | Not conducted |
| Example 24 | Fe | lower 5/upper 15 | 16.6 | 0.1 | Not conducted |
| Example 25 | Fe | lower 5/upper 15 | 19.5 | 0.1 | Not conducted |
| Example 26 | Fe | lower 15/upper 5 | 19.6 | 0.1 | Not conducted |
| Example 27 | Fe | 10 | 10.3 | 0.1 | 800°C 4h |
| Example 28 | Fe | 10 | 16.4 | 0.1 | 350°C 4h |
| Example 29 | Fe | 10 | 16.8 | 0.1 | 600°C 4h |
| Example 30 | Fe | 10 | 15.8 | 0.1 | 750°C 4h |
| Example 31 | Fe | 50 | 8.7 | 0.2 | Not conducted |
| Example 32 | Fe | 50 | 14.7 | 0.2 | Not conducted |
| Example 33 | Fe | 50 | 18.8 | 0.2 | Not conducted |
| Example 34 | Fe ,Ni | 20 | 10.7 | 0.2 | Not conducted |
| Example 35 | Fe ,Ni | 20 | 10.8 | 0.2 | 300°C 12h |
| Comparatve example 1 | Fe | 10 | 5.5 | 0.2 | Not conducted |
| Comparatve example 2 | Rolled Fe | - | 11.6 | - | Not conducted |
| Comparatve example 3 | Cu | 10 | 12.0 | 0.1 | Not conducted |
| Comparatve example 4 | Cu | 10 | 12.1 | 0.1 | 350°C 4h |

[Table 2]

| | Mechanical properties | | Electrolytic surface side (110) plane crystallite diameter [nm] | Substrate surface side (110) plane crystallite diameter [nm] | Electrolytic surface Sa [$\mu$m] | Substrate su rface Sa [$\mu$m] |
|---|---|---|---|---|---|---|
| | Tensile strength [MPa] | Elongation [%] | | | | |
| Example 1 | 604 | 2.4 | 52.1 | 39.7 | 0.16 | 0.11 |
| Example 2 | 574 | 2.3 | 55.0 | 39.8 | 0.21 | 0.11 |
| Example 3 | 145 | 8.1 | 113.7 | 109.1 | 0.16 | 0.12 |
| Example 4 | 332 | 2.7 | 93.8 | 83.2 | 0.33 | 0.50 |
| Example 5 | 612 | 3.3 | 59.5 | 51.8 | 0.25 | 0.12 |
| Example 6 | 597 | 2.5 | 48.6 | 36.7 | 0.18 | 0.18 |

(continued)

| | Mechanical properties | | Electrolytic surface side (110) plane crystallite diameter [nm] | Substrate surface side (110) plane crystallite diameter [nm] | Electrolytic surface Sa [$\mu$m] | Substrate surface Sa [$\mu$m] |
|---|---|---|---|---|---|---|
| | Tensile strength [MPa] | Elongation [%] | | | | |
| Example 7 | 376 | 2.2 | 48.2 | 37.2 | 0.34 | 0.25 |
| Example 8 | 664 | 3.8 | 52.5 | 34.2 | 0.25 | 0.14 |
| Example 9 | 654 | 3.6 | 62.0 | 47.6 | 0.23 | 0.12 |
| Example 10 | 455 | 5.2 | 73.1 | 50.1 | 0.37 | 0.04 |
| Example 11 | 492 | 5.8 | 69.3 | 46.9 | 0.30 | 0.04 |
| Example 12 | 369 | 5.0 | 69.3 | 62.4 | 0.45 | 0.09 |
| Example 13 | 522 | 5.2 | 68.3 | 47.3 | 0.31 | 0.10 |
| Example 14 | 424 | 3.0 | 69.7 | 55.0 | 0.54 | 0.09 |
| Example 15 | 551 | 4.0 | 65.7 | 38.5 | 0.34 | 0.09 |
| Example 16 | 526 | 2.5 | 54.8 | 45.3 | 0.30 | 0.04 |
| Example 17 | 524 | 2.0 | 57.4 | 46.7 | 0.36 | 0.10 |
| Example 18 | 550 | 2.7 | 56.2 | 43.9 | 0.33 | 0.10 |
| Example 19 | 562 | 2.8 | 57.8 | 44.6 | 0.31 | 0.10 |
| Example 20 | 563 | 3.8 | 63.0 | 40.2 | 0.18 | 0.11 |
| Example 21 | 360 | 2.8 | 57.8 | 45.0 | 0.58 | 0.10 |
| Example 22 | 533 | 3.3 | 61.5 | 42.1 | 0.25 | 0.08 |
| Example 23 | 488 | 5.2 | 69.3 | 42.3 | 0.34 | 0.12 |
| Example 24 | 505 | 5.3 | 54.9 | 58.5 | 0.43 | 0.10 |
| Example 25 | 415 | 7.7 | 67.3 | 65.8 | 0.56 | 0.12 |
| Example 26 | 423 | 7.8 | 63.7 | 49.4 | 0.50 | 0.11 |
| Example 27 | 158 | 7.3 | 131.9 | 87.7 | 0.23 | 0.11 |
| Example 28 | 403 | 4.1 | 85.8 | 69.8 | 0.46 | 0.08 |
| Example 29 | 201 | 8.3 | 97.2 | 114.4 | 0.36 | 0.09 |
| Example 30 | 152 | 11.4 | 132.2 | 144.9 | 0.30 | 0.10 |
| Example 31 | 486 | 2.6 | 64.5 | 49.1 | 0.22 | 0.13 |
| Example 32 | 456 | 3.7 | 67.6 | 51.6 | 0.34 | 0.12 |
| Example 33 | 515 | 6.5 | 71.8 | 47.3 | 0.43 | 0.16 |
| Example 34 | 659 | 4.0 | 51.8 | 30.9 | 0.24 | 0.10 |
| Example 35 | 677 | 3.0 | 62.1 | 42.4 | 0.24 | 0.09 |
| Comparative example 1 | 217 | 1.2 | 39.7 | 40.2 | 0.22 | 0.19 |
| Comparative example 2 | 453 | 0.9 | 13.1 | 13.1 | 0.35 | 0.35 |
| Com parable example 3 | 299 | 6.1 | 63.6 | - | 0.24 | 0.13 |

(continued)

| | Mechanical properties | | Electrolytic surface side (110) plane crystallite diameter [nm] | Substrate surface side (110) plane crystallite diameter [nm] | Electrolytic surface Sa [μm] | Substrate surface Sa [μm] |
|---|---|---|---|---|---|---|
| | Tensile strength [MPa] | Elongation [%] | | | | |
| Comparative example 4 | 119 | 11.7 | 115.5 | - | 0.30 | 0.17 |

[Table 3]

| | Electrolytic surface | | | | | | | |
|---|---|---|---|---|---|---|---|---|
| | Crystalline orientation index (electrolytic surface) | | | | Relative "tensity (electrolytic surface) | | | |
| | Iron (1 1 0) | Iron (2 0 0) | Iron (2 1 1) | Iron (2 2 0) | Iron (1 1 0) | Iron (2 0 0) | Iron (2 1 1) | Iron (2 2 0) |
| Example 1 | 1.24 | 0.15 | 0.26 | 0.85 | 100 | 1.42 | 3.72 | 3.17 |
| Example 2 | 1.25 | 0.10 | 0.14 | 1.01 | 100 | 0.97 | 2.02 | 3.71 |
| Examp le 3 | 1.14 | 0.32 | 0.45 | 1.75 | 100 | 3.29 | 6.98 | 7.04 |
| Examp le 4 | 1.06 | 0.76 | 0.70 | 1.38 | 100 | 8.32 | 11.58 | 5.98 |
| Examp le 5 | 1.13 | 0.19 | 0.38 | 2.57 | 100 | 1.98 | 6.03 | 10.48 |
| Examp le 6 | 1.19 | 0.29 | 0.44 | 0.79 | 100 | 2.81 | 6.58 | 3.05 |
| Example 7 | 1.11 | 0.63 | 0.68 | 0.84 | 100 | 6.65 | 10.84 | 3.49 |
| Examp le 8 | 1.12 | 0.22 | 0.85 | 0.82 | 100 | 2.31 | 13.37 | 3.35 |
| Examp le 9 | 0.74 | 0.35 | 2.45 | 2.64 | 100 | 5.4 | 58.34 | 16.33 |
| Example 10 | 1.19 | 0.31 | 0.34 | 1.07 | 100 | 2.97 | 5 | 4.11 |
| Example 11 | 1.24 | 0.14 | 0.20 | 0.99 | 100 | 1.29 | 2.83 | 3.68 |
| Example 12 | 1.18 | 0.35 | 0.37 | 1.10 | 100 | 3.42 | 5.58 | 4.27 |
| Example 13 | 1.23 | 0.18 | 0.25 | 0.96 | 100 | 1.71 | 3.67 | 3.59 |
| Example 14 | 1.11 | 0.33 | 0.38 | 2.65 | 100 | 3.39 | 6.04 | 10.97 |
| Example 15 | 0.90 | 0.40 | 1.77 | 1.69 | 100 | 5.13 | 34.68 | 8.6 |
| Example 16 | 1.13 | 0.49 | 0.65 | 0.91 | 100 | 5.06 | 10.2 | 3.74 |
| Example 17 | 1.10 | 0.60 | 0.75 | 0.85 | 100 | 6.29 | 12.16 | 3.55 |
| Example 18 | 1.09 | 0.65 | 0.72 | 0.90 | 100 | 6.94 | 11.63 | 3.79 |
| Example 19 | 1.16 | 0.41 | 0.55 | 0.79 | 100 | 4.09 | 8.41 | 3.13 |
| Example 20 | 1.27 | 0.03 | 0.12 | 0.94 | 100 | 0.31 | 1.7 | 3.39 |
| Example 21 | 0.89 | 1.28 | 1.30 | 1.48 | 100 | 16.57 | 25.65 | 7.61 |
| Example 22 | 1.26 | 0.07 | 0.15 | 1.05 | 100 | 0.61 | 2.16 | 3.83 |
| Example 23 | 1.26 | 0.04 | 0.11 | 1.15 | 100 | 0.34 | 1.56 | 4.19 |
| Example 24 | 1.14 | 0.78 | 0.37 | 0.85 | 100 | 7.86 | 5.67 | 3.42 |
| Example 25 | 1.08 | 1.03 | 0.52 | 1.05 | 100 | 11.02 | 8.48 | 4.49 |
| Example 26 | 1.10 | 0.79 | 0.55 | 1.15 | 100 | 8.39 | 8.85 | 4.83 |
| Example 27 | 0.86 | 2.97 | 0.16 | 2.26 | 100 | 40.06 | 3.35 | 12.05 |

(continued)

| | Electrolytic su rface | | | | | | | |
|---|---|---|---|---|---|---|---|---|
| | Crystalline orientation index (electrolytic surface) | | | | Relative "tensity (electrolytic surface) | | | |
| | Iron (1 1 0) | Iron (2 0 0) | Iron (2 1 1) | Iron (2 2 0) | Iron (1 1 0) | Iron (2 0 0) | Iron (2 1 1) | Iron (2 2 0) |
| Example 28 | 0.98 | 0.84 | 0.77 | 2.62 | 100 | 9.93 | 13.85 | 12.22 |
| Example 29 | 1.11 | 0.74 | 0.44 | 1.38 | 100 | 7.71 | 7.01 | 5.69 |
| Example 30 | 0.69 | 4.31 | 0.74 | 0.42 | 100 | 72.58 | 19.06 | 2.81 |
| Example 31 | 1.21 | 0.24 | 0.35 | 0.93 | 100 | 2.28 | 5.09 | 3.54 |
| Example 32 | 1.24 | 0.15 | 0.18 | 1.06 | 100 | 1.36 | 2.51 | 3.91 |
| Example 33 | 1.20 | 0.10 | 0.13 | 2.24 | 100 | 0.99 | 1.95 | 8.58 |
| Example 34 | 1.13 | 0.69 | 0.60 | 0.53 | 100 | 7.12 | 9.38 | 2.16 |
| Example 35 | 1.17 | 0.54 | 0.47 | 0.48 | 100 | 5.31 | 7.15 | 1.87 |
| Com parative example 1 | 1.15 | 0.47 | 0.52 | 0.82 | 100 | 4.76 | 7.91 | 3.27 |
| Com parative example 2 | 0.00 | 3.41 | 5.33 | 0.01 | 0.04 | 41.9 | 100 | 0.05 |
| Com parative examp le 3 | | | | | | | | |
| Com parative examp le 4 | | | | | | | | |

[Table 4]

| | Substrate surface | | | | | | | |
|---|---|---|---|---|---|---|---|---|
| | Crystaline orientation hdex (substrate surface) | | | | Relative "tensity (substrate surface) | | | |
| | Iron (110) | Iron (200) | Iron (211) | Iron (220) | Iron (110) | Iron (200) | Iron (211) | Iron (220) |
| Example 1 | 1.11 | 0.59 | 0.66 | 0.98 | 100 | 6.23 | 10.63 | 4.09 |
| Example 2 | 1.10 | 0.63 | 0.66 | 0.99 | 100 | 6.59 | 10.6 | 4.13 |
| Example 3 | 1.09 | 0.37 | 0.57 | 2.29 | 100 | 3.93 | 9.21 | 9.65 |
| Example 4 | 0.98 | 1.19 | 0.88 | 1.32 | 100 | 14.02 | 15.81 | 6.19 |
| Example 5 | 1.09 | 0.61 | 0.73 | 1.14 | 100 | 6.49 | 11.88 | 4.84 |
| Example 6 | 1.10 | 0.58 | 0.74 | 0.91 | 100 | 6.14 | 11.86 | 3.81 |
| Example 7 | 1.09 | 0.70 | 0.71 | 0.85 | 100 | 7.44 | 11.53 | 3.56 |
| Example 8 | 1.11 | 0.55 | 0.71 | 0.88 | 100 | 5.79 | 11.38 | 3.66 |
| Example 9 | 1.07 | 0.71 | 0.79 | 1.04 | 100 | 7.68 | 13.04 | 4.47 |
| Example 10 | 1.06 | 0.84 | 0.77 | 1.06 | 100 | 9.24 | 12.9 | 4.63 |
| Example 11 | 1.10 | 0.65 | 0.69 | 0.92 | 100 | 6.9 | 11.17 | 3.85 |
| Example 12 | 1.04 | 0.72 | 0.92 | 1.07 | 100 | 8 | 15.56 | 4.73 |
| Example 13 | 1.08 | 0.71 | 0.79 | 0.88 | 100 | 7.63 | 12.92 | 3.75 |
| Example 14 | 1.06 | 0.74 | 0.84 | 0.88 | 100 | 8.07 | 13.95 | 3.81 |

(continued)

| | Substrate surface | | | | | | | |
|---|---|---|---|---|---|---|---|---|
| | Crystaline orientation hdex (substrate surface) | | | | Relative "tensity (substrate surface) | | | |
| | Iron (110) | Iron (200) | Iron (211) | Iron (220) | Iron (110) | Iron (200) | Iron (211) | Iron (220) |
| Example 15 | 1.08 | 0.69 | 0.80 | 0.81 | 100 | 7.45 | 13.13 | 3.47 |
| Example 16 | 1.06 | 0.80 | 0.82 | 0.88 | 100 | 8.71 | 13.65 | 3.82 |
| Example 17 | 1.02 | 1.10 | 0.86 | 0.80 | 100 | 12.53 | 14.93 | 3.6 |
| Example 18 | 0.90 | 2.13 | 0.88 | 0.85 | 100 | 27.46 | 17.24 | 4.33 |
| Example 19 | 1.04 | 1.02 | 0.78 | 0.90 | 100 | 11.41 | 13.23 | 3.97 |
| Example 20 | 1.10 | 0.73 | 0.58 | 1.02 | 100 | 7.71 | 9.32 | 4.23 |
| Example 21 | 1.05 | 0.99 | 0.77 | 0.81 | 100 | 10.87 | 12.93 | 3.53 |
| Example 22 | 1.08 | 0.76 | 0.75 | 0.91 | 100 | 8.15 | 12.31 | 3.89 |
| Example 23 | 1.10 | 0.70 | 0.68 | 0.90 | 100 | 7.46 | 10.99 | 3.8 |
| Example 24 | 1.08 | 0.79 | 0.74 | 0.84 | 100 | 8.55 | 12.15 | 3.58 |
| Example 25 | 1.05 | 0.87 | 0.83 | 0.87 | 100 | 9.54 | 13.93 | 3.8 |
| Example 26 | 1.07 | 0.87 | 0.75 | 0.78 | 100 | 9.4 | 12.4 | 3.34 |
| Example 27 | 1.03 | 1.17 | 0.55 | 1.66 | 100 | 13.23 | 9.42 | 7.44 |
| Example 28 | 1.01 | 1.00 | 0.94 | 1.10 | 100 | 11.58 | 16.57 | 5.02 |
| Example 29 | 0.78 | 1.92 | 1.35 | 2.17 | 100 | 28.69 | 30.66 | 12.82 |
| Example 30 | 0.58 | 5.35 | 0.75 | 0.04 | 93.78 | 100 | 21.48 | 0.31 |
| Example 31 | 1.08 | 0.66 | 0.80 | 0.93 | 100 | 7.07 | 13.09 | 3.95 |
| Example 32 | 1.07 | 0.70 | 0.82 | 0.85 | 100 | 7.58 | 13.47 | 3.62 |
| Example 33 | 0.95 | 0.69 | 1.18 | 2.15 | 100 | 8.44 | 21.99 | 10.42 |
| Example 34 | 1.11 | 0.82 | 0.64 | 0.51 | 100 | 8.62 | 10.30 | 2.14 |
| Example 35 | 1.10 | 0.83 | 0.66 | 0.54 | 100 | 8.78 | 10.60 | 2.24 |
| Comparative example 1 | 1.11 | 0.57 | 0.67 | 1.06 | 100 | 5.96 | 10.78 | 4.43 |
| Comparative example 2 | same as above | | | | | | | |
| Comparative example 3 | | | | | | | | |
| Comparative example 4 | | | | | | | | |

[Table 5]

| | Electrolytic surface side average crystal grain diameter [$\mu$m] | Substrate surface side average crystal grain diameter [$\mu$m] | Evaluation of active material adhesion | |
|---|---|---|---|---|
| | | | Electrolyti c surface side | Substrate surface side |
| Example 1 | 0.86 | 0.61 | A | B |
| Example 2 | 1.11 | 0.67 | A+ | A |

(continued)

| | Electrolytic surface side average crystal grain diameter [$\mu$m ] | Substrate surface side average crystal grain diameter [$\mu$m ] | Evaluation of active material adhesion | |
|---|---|---|---|---|
| | | | Electrolyti c surface side | Substrate surface side |
| Example 3 | 4.27 | 2.56 | A+ | A+ |
| Example 4 | 0.86 | 0.86 | A | A |
| Example 5 | 19.1 | 19.1 | A+ | A+ |
| Example 6 | 0.79 | 0.47 | A | B |
| Example 7 | 0.68 | 0.42 | A | C |
| Example 8 | 0.98 | 0.60 | A | B |
| Example 9 | 0.97 | 0.57 | A | B |
| Example 10 | 1.16 | 0.49 | A+ | B |
| Example 11 | 1.82 | 0.49 | A+ | B |
| Example 12 | 1.42 | 1.06 | A+ | A+ |
| Example 13 | 1.27 | 0.8 | A+ | A |
| Example 14 | 1.82 | 1.21 | A+ | A+ |
| Example 15 | 1.21 | 0.73 | A+ | A |
| Example 16 | 1.06 | 0.71 | A+ | A |
| Example 17 | 1.27 | 0.64 | A+ | B |
| Example 18 | 1.44 | 0.58 | A+ | B |
| Example 19 | 1.27 | 0.61 | A+ | B |
| Example 20 | 1.27 | 0.58 | A+ | B |
| Example 21 | 2.36 | 1.93 | A+ | A+ |
| Example 22 | 1.52 | 0.84 | A+ | A |
| Example 23 | 1.82 | 1.01 | A+ | A+ |
| Example 24 | 1.59 | 0.8 | A+ | A |
| Example 25 | 3.03 | 1.14 | A+ | A+ |
| Example 26 | 3.03 | 1.65 | A+ | A+ |
| Example 27 | 12.9 | 12.9 | A+ | A+ |
| Example 28 | 2.6 | 1.65 | A+ | A+ |
| Example 29 | 2.02 | 4.55 | A+ | A+ |
| Example 30 | 12.6 | 12.6 | A+ | A+ |
| Example 31 | 1.59 | 0.71 | A+ | A |
| Example 32 | 1.27 | 0.55 | A+ | B |
| Example 33 | 1.65 | 1.14 | A+ | A+ |
| Example 34 | 0.81 | 0.52 | A | B |
| Example 35 | 1.17 | 0.44 | A+ | C |
| Comparative example 1 | 0.65 | 0.42 | B | C |

(continued)

| | Electrolytic surface side average crystal grain diameter [$\mu$m] | Substrate surface side average crystal grain diameter [$\mu$m] | Evaluation of active material adhesion | |
| --- | --- | --- | --- | --- |
| | | | Electrolytic surface side | Substrate surface side |
| Comparative example 2 | unmeasurable | unmeasurable | C | C |
| Comparative example 3 | 0.85 | 0.38 | A | C |
| Comparative example 4 | 2.55 | 1.42 | A+ | A+ |

It was confirmed that each of Examples has such characteristic properties as favorable tensile strength and elongation. On the other hand, it was confirmed that Comparative Examples could not achieve the objectives in terms of tensile strength or elongation.

More in detail, Example 1 has such favorable characteristics as tensile strength and elongation, since the crystallite diameter on (110) plane of iron in one surface is equal to or more than 45 nm. On the other hand, it was found that Comparative Example 1 cannot exhibit sufficient elongation which is an inherent property of iron, since the crystallite diameter on (110) plane of iron in both surfaces is less than 45 nm.

When Example 1 is compared with Example 3 in which the electrolytic iron foil produced under the same conditions as those in Example 1 is annealed at 600°C, though tensile strength is lowered by annealing, the foil retains a certain degree or more strength (tensile strength is equal to or more than 130 MPa), and further elongation can be enhanced conspicuously, so that breakage or tearing of the foil can be restrained. Note that, since Example 3 in which annealing is conducted at 600°C is one in which annealing has been performed at a high temperature, it is considered that further lowering in tensile strength rarely occurs even when the foil is heated in a battery manufacturing step.

When Comparative Example 2 which is a rolled iron foil is examined, though favorable tensile strength owing to being iron is secured, elongation is not sufficiently exhibited, since the crystallite diameter is less than 45 nm. Accordingly, when the foil is used as a current collector, there is a possibility that the foil cannot endure volume change due to repeated charging and discharging and that breakage of the foil occurs.

In the case where the electrolytic iron foil produced under the same conditions as those in Example 22 is annealed at a temperature of 350°C for 4 hours (Example 28), it was found that, though tensile strength is somewhat lowered, elongation is enhanced by approximately 24%, while sufficient tensile strength is retained.

On the other hand, when Comparative Example 3 and Comparative Example 4 which are samples of copper foil are compared with each other, the copper foil is conspicuously softened and tensile strength is lowered to 119 MPa when heat of 350°C is applied thereto, so that it is found that there is a risk of lowered tensile strength and insufficient strength when the foil is heated in the battery manufacturing step.

In addition, in other ones of Examples, the crystallite diameter on (110) plane of iron in at least one surface is set to be equal to or more than 45 nm, whereby each of properties could be set in a favorable range.

Besides, in each of Examples, it was confirmed that at least either one surface (the first surface or the second surface) has adhesion with the active material. On the other hand, it was confirmed that the iron foils indicated in Comparative Examples do not have the abovementioned property.

More in detail, in Examples 1 to 35, it was confirmed that it is sufficient if the crystal grain diameter in at least either one surface is equal to or more than 0.66 um and that adhesion with the active material is excellent. In addition, in Examples 2, 3, 5, 10 to 33, and 35, it was confirmed that the crystal grain diameter in at least either one surface is equal to or more than 1.00 um and that adhesion with the active material is more excellent. Note that in Examples 1 to 6 and 8 to 34, it was confirmed that the crystal grain diameter in both surfaces is equal to or more than 0.45 um and that both surfaces have sufficient adhesion with the active material.

On the other hand, in Examples 7 and 35 and Comparative Examples 1 and 3, it was confirmed that, although the crystal grain diameter in at least either one surface is equal to or more than 0.45 um and adhesion with the active material is secured, when the crystal grain diameter in the other surface is less than 0.45 um, enhancement of adhesion with the active material cannot be achieved. In addition, in Comparative Example 2, it was confirmed that the foil has a rolled aggregate structure and that adhesion with the active material cannot be achieved.

Note that there are various methods as discrimination methods for the electrolytic iron foils indicated in Examples and the rolled iron foil indicated in Comparative Example 2, and main discrimination methods will be described below.

<Discrimination method A>

As a discrimination method for the electrolytic iron foil and the rolled iron foil from the viewpoint of chemical composition, there can be mentioned quantitative analysis by ICP emission analysis. Specifically, since, in the case where the rolled iron foil is manufactured in blast furnace or electric furnace, it is difficult to suppress mixing of manganese (Mn) to or below a certain level, when the foil contains Mn in an amount of equal to or more than 0.3 wt% among all elemental ingredients, the foil can be determined to be a rolled iron foil. On the other hand, when the content of Mn in the foil is less than 0.05 wt%, the foil can be determined to be an electrolytic iron foil. Note that this quantitative analysis by ICP emission analysis is effective discrimination means for both pre-annealing and post-annealing foils.

<Discrimination method B>

As a discrimination method for the electrolytic iron foil and the rolled iron foil from the viewpoint of crystalline orientation index, there can be mentioned confirmation of diffraction peaks by X-ray diffraction. Specifically, in the case where the crystalline orientation index is calculated from the intensity ratio of diffraction peaks by X-ray diffraction, the rolled iron foil tends to strongly exhibit the orientation of (211) plane. In addition, in the rolled iron foil, the influence of (211) plane remains strong, as compared with the electrolytic iron foil, even after annealing. On the other hand, in the case of the electrolytic iron foil, the orientation of (110) plane is relatively strong, so that orientation of (211) plane tends to be not so strong, and it is possible to discriminate the electrolytic iron foil and the rolled iron foil according to the orientation of (211) plane.
Note that in the case of more accurately discriminating the electrolytic iron foil and the rolled iron foil after a heat treatment, this method is preferably used together with the discrimination method A.

<Discrimination method C>

It is possible to discriminate the electrolytic iron foil and the rolled iron foil from the viewpoint of crystal structure. In other words, in the case of observing the crystal structure of the pre-annealing rolled iron foil, such crystal grains as being elongated in the rolling direction are observed in the surface, and in the case of observing a section, the foil includes a plurality of crystal grains in the plate thickness direction, and the crystal grains are elongated in the rolling direction. On the other hand, in the case of the electrolytic iron foil, such crystal grins as being elongated in the rolling direction are not present in the surface, and such a structure as being grown from the substrate surface side toward the electrolytic surface side appears in a section.
Note that since the crystal structure varies by heat treatment, while this discrimination method can be applied to the post-heat treatment material depending on the heat treatment conditions, basically, this method is preferably used together with the discrimination methods A and B for discriminating the post-heat treatment electrolytic iron foil and rolled iron foil.

<Discrimination method D>

It is possible to discriminate the electrolytic iron foil and the rolled iron foil from the viewpoint of surface roughness. Specifically, in the case where the three-dimensional surface texture parameters (Sdq, Sdr, Sal, and the like) are measured by a laser microscope, roll marks peculiar to rolling are formed on both surfaces of the rolled iron foil, so that Sdq, Sdr, and Sal often fall outside the range of the numerical values described as preferable values in the present embodiment. On the other hand, in the case of the electrolytic iron foil, the roughness of the substrate is liable to be transferred onto the substrate surface, so that the surface has a roughness similar to the surface roughness of the rolled iron foil, but, on the electrolytic surface, surface ruggedness attendant on the peculiar crystal growth precipitated by electrolysis is present, and Sdq, Sdr, and Sal fall within range of the numerical values illustrated as preferable values in the present embodiment.
Note that since the abovementioned surface roughness varies in numerical value in the case where the material surface is subjected to etching or polishing, this method is preferably used together with the discrimination method A and, further, the discrimination method B or C.
Note that the above-described embodiment and each Example can be modified variously within such ranges as not to depart from the gist of the present invention.
In addition, while the electrolytic iron foils in the abovementioned embodiment and Examples have been described to be mainly used for battery current collectors, this is non-limitative, and, for example, it can be applied to other uses such as heat radiators and electromagnetic wave shields.

[Industrial Applicability]

As has been described above, the electrolytic iron foil, the battery current collector, and the battery of the present invention are applicable to a wide field of industries such as automobiles and electronic apparatuses.

[Reference Signs List]

10: Electrolytic iron foil
10a: First surface
10b: Second surface

**Claims**

1. An electrolytic iron foil wherein,

   in at least either one surface, a crystallite diameter on (110) plane of iron is equal to or more than 45 nm, and the electrolytic iron foil is less than 20 um in thickness.

2. The electrolytic iron foil according to claim 1, wherein, in both surfaces, a crystalline orientation index of the (110) plane is equal to or more than 0.2.

3. The electrolytic iron foil according to claim 1 or 2, wherein, in at least either one surface, an average crystal grain diameter of crystal grains on a surface is equal to or more than 0.66 um.

4. The electrolytic iron foil according to any one of claims 1 to 3, wherein elongation is equal to or more than 1.6%.

5. The electrolytic iron foil according to any one of claims 1 to 4, wherein tensile strength is equal to or more than 130 MPa.

6. An electrolytic iron foil for a battery current collector, comprising:
   the electrolytic iron foil according to any one of claims 1 to 5.

7. An electrolytic iron foil for a nonaqueous battery current collector, comprising:
   the electrolytic iron foil according to any one of claims 1 to 6.

[Fig.1]

10a

10

10b

[Fig.2]

JIS K6251-4

[Fig.3]

## INTERNATIONAL SEARCH REPORT

| International application No. |
|---|
| PCT/JP2021/026580 |

A. CLASSIFICATION OF SUBJECT MATTER
Int. Cl. C25D1/04(2006.01)i, H01M4/66(2006.01)i
FI: C25D1/04 331, H01M4/66 A

According to International Patent Classification (IPC) or to both national classification and IPC

B. FIELDS SEARCHED

Minimum documentation searched (classification system followed by classification symbols)
Int. Cl. C25D1/04, H01M4/66

Documentation searched other than minimum documentation to the extent that such documents are included in the fields searched
Published examined utility model applications of Japan      1922-1996
Published unexamined utility model applications of Japan    1971-2021
Registered utility model specifications of Japan            1996-2021
Published registered utility model applications of Japan    1994-2021

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2015-504599 A (KOREA INSTITUTE OF INDUSTRIAL TECHNOLOGY) 12 February 2015 (2015-02-12), entire text | 1-7 |
| A | JP 2010-518252 A (HYDRO QUEBEC) 27 May 2010 (2010-05-27), entire text | 1-7 |
| A | JP 8-60392 A (SUMITOMO METAL MINING CO., LTD.) 05 March 1996 (1996-03-05), entire text | 1-7 |
| A | JP 1-104792 A (NISSHIN STEEL CO., LTD.) 21 April 1989 (1989-04-21), entire text | 1-7 |

☐ Further documents are listed in the continuation of Box C.    ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 03.08.2021 | 10.08.2021 |

| Name and mailing address of the ISA/ Japan Patent Office 3-4-3, Kasumigaseki, Chiyoda-ku, Tokyo 100-8915, Japan | Authorized officer |
|---|---|
| | Telephone No. |

Form PCT/ISA/210 (second sheet) (January 2015)

**EP 4 183 904 A1**

**INTERNATIONAL SEARCH REPORT**

Information on patent family members

International application No.

PCT/JP2021/026580

| Patent Documents referred to in the Report | Publication Date | Patent Family | Publication Date |
|---|---|---|---|
| JP 2015-504599 A | 12.02.2015 | US 2014/0332069 A1 entire document WO 2013/073778 A1 KR 10-2013-0054909 A | |
| JP 2010-518252 A | 27.05.2010 | US 2010/0071811 A1 entire document WO 2008/092265 A1 EP 2142678 A1 CA 2576752 A1 CA 2675987 A1 CN 101600813 A KR 10-2009-0129995 A | |
| JP 8-60392 A | 05.03.1996 | (Family: none) | |
| JP 1-104792 A | 21.04.1989 | (Family: none) | |

Form PCT/ISA/210 (patent family annex) (January 2015)

**REFERENCES CITED IN THE DESCRIPTION**

**Patent documents cited in the description**

- JP 2017014608 A
- JP 58073787 A
- JP 8060392 A
- WO 2020017655 A